# EUROPEAN PATENT APPLICATION

(11) **EP 4 716 045 A1**
(43) Date of publication of application: **25.03.2026**
(21) Application number: 25173187.3
(22) Date of filing: 29.04.2025
(51) Int. Cl.: H02H 7/122, H02H 3/24

(54) **INVERTER, SHORT-CIRCUIT PROTECTION METHOD FOR INVERTER, AND ENERGY SYSTEM**

(30) Priority: 18.09.2024 CN 202411311499
(71) Applicant: Sungrow Power Supply Co., Ltd., Hefei, Anhui 230088 (CN)
(72) Inventor: LI, Bijie, 230088 Hefei, Anhui (CN); YU, Yanfei, 230088 Hefei, Anhui (CN); YUAN, Yue, 230088 Hefei, Anhui (CN)
(74) Representative: Zacco Norway AS

(57) **Abstract**

An inverter, a short-circuit protection method for the inverter, and an energy system are provided. The inverter includes: a DC bus, configured to connect a DC source, where a semiconductor component is connected between the DC source and the DC bus; an inverter circuit, where a DC side of the inverter circuit is connected to the DC bus, an AC side of the inverter circuit is configured to connect a power grid via a designated relay; and a controller, configured to turn off the designated relay within a safe current breaking period of a short-circuit condition, in response to the short-circuit condition in which a DC line between the semiconductor component and the DC source is short-circuited to ground, or the DC source is short-circuited to ground, where during the safe current breaking period, a short-circuit current is 0 or less than a breaking current of the designated relay.

## Description

### FIELD

Embodiments in the present disclosure relate to the technology field of power electronics, in particular to an inverter, a short-circuit protection method for an inverter, and an energy system.

### BACKGROUND

With the development of energy technology, photovoltaic power generation systems and other energy systems become an important part of modern power systems. Some energy systems are provided with an inverter and a DC source capable of supplying DC power (such as a photovoltaic module or an energy storage battery). The DC power supplied by the DC source is converted into AC power by the inverter, and the AC power is fed into the power grid.

In the energy system, a DC line of the DC source may be short-circuited to ground in a practical application. In this case, a short-circuit loop may be formed between the power grid, the inverter and the DC source, and a large short-circuit current is generated. In order to protect various components in the energy system, it is required to immediately turn off a relay to disconnect the inverter from the power grid.

### SUMMARY

Embodiments in the present disclosure provide an inverter, a short-circuit protection method for the inverter, and an energy system, to reduce a risk of damage to a relay when a DC source or DC line on a DC side of the inverter is short-circuited to ground.

An inverter is provided in an embodiment of the present disclosure. The inverter includes: a direct-current, DC, bus, configured to connect a DC source, where a semiconductor component is connected between the DC source and the DC bus; an inverter circuit, where a DC side of the inverter circuit is connected to the DC bus, an alternating-current, AC, side of the inverter circuit is configured to connect a power grid via a designated relay; and a controller, configured to turn off the designated relay within a safe current breaking period of a short-circuit condition, in response to the short-circuit condition in which a DC line between the semiconductor component and the DC source is short-circuited to ground, or the DC source is short-circuited to ground, where during the safe current breaking period, a short-circuit current is 0 or is less than a breaking current of the designated relay.

In some embodiments, the semiconductor component is connected between a positive electrode of the DC source and a DC positive bus of the DC bus; the short-circuit condition includes that an output voltage of the DC source is less than a grid voltage, and the positive electrode of the DC source is short-circuited to ground; or, a DC positive line between the semiconductor component and the positive electrode of the DC source is short-circuited to ground; and the safe current breaking period includes at least one of: a positive half-cycle period during which the grid voltage is in a positive half cycle; and a partial negative half-cycle period during which the grid voltage is in a negative half cycle and the grid voltage is less than the output voltage of the DC source.

In some embodiments, the semiconductor component is connected between a positive electrode of the DC source and a DC positive bus of the DC bus; the short-circuit condition includes that a grid voltage is greater than a difference between a positive bus voltage of the DC bus and an output voltage of the DC source, and the positive electrode of the DC source is short-circuited to ground; or, a DC positive line between the semiconductor component and the positive electrode of the DC source is short-circuited to ground; and the safe current breaking period includes at least one of: a negative half-cycle period during which the grid voltage is in a negative half cycle; and a partial positive half-cycle period during which the grid voltage is in a positive half cycle and a magnitude of the grid voltage is less than the difference between the positive bus voltage of the DC bus and the output voltage of the DC source.

In some embodiments, the semiconductor component is connected between a positive electrode of the DC source and a DC positive bus of the DC bus; the controller is further configured to turn off the designated relay within a safe current breaking period of a short-circuit condition, in response to the short-circuit condition in which a negative electrode of the DC source is short-circuited to ground, or a DC negative line connected to the negative electrode of the DC source is short-circuited to ground, where the safe current breaking period includes a positive half-cycle period during which the grid voltage is in a positive half cycle.

In some embodiments, the semiconductor component is configured to form a DC-DC converter in common negative connection arranged between the DC source and the DC bus.

In some embodiments, the semiconductor component is arranged between a negative electrode of the DC source and a DC negative bus of the DC bus; the short-circuit condition includes that an output voltage of the DC source is less than a grid voltage, and the negative electrode of the DC source is short-circuited to ground; or, a DC negative line between the semiconductor component and the negative electrode of the DC source is short-circuited to ground; and the safe current breaking period includes at least one of: a negative half-cycle period during which the grid voltage is in a negative half cycle, and a partial positive half-cycle period during which the grid voltage is in a positive half cycle and a magnitude of the grid voltage is less than the output voltage.

In some embodiments, the semiconductor component is arranged between a negative electrode of the DC source and a DC negative bus of the DC bus; the short-circuit condition includes that a grid voltage is greater than a difference between a positive bus voltage of the DC bus and an output voltage of the DC source, and the negative electrode of the DC source is short-circuited to ground; or, a DC negative line between the semiconductor component and the negative electrode of the DC source is short-circuited to ground; and the safe current breaking period includes at least one of: a positive half-cycle period during which the grid voltage is in a positive half cycle, and a partial negative half-cycle period during which the grid voltage is in a negative half cycle and a magnitude of the grid voltage is less than the difference between the positive bus voltage of the DC bus and the output voltage of the DC source.

In some embodiments, the semiconductor component is arranged between a negative electrode of the DC source and a DC negative bus of the DC bus; the controller is further configured to turn off the designated relay within a safe current breaking period of a short-circuit condition, in response to the short-circuit condition in which a positive electrode of the DC source is short-circuited to ground, or a DC positive line connected to the positive electrode of the DC source is short-circuited to ground, where the safe current breaking period includes a negative half-cycle period during which the grid voltage is in a negative half cycle.

In some embodiments, the semiconductor component is configured to form a DC-DC converter in common positive connection connected between the DC source and the DC bus.

In some embodiments, the controller is configured to turn off the designated relay within the safe current breaking period, after at least a part of switching components in the inverter circuit is turned off.

In some embodiments, the semiconductor component is a semiconductor switch; and the controller is further configured to turn off the designated relay within the safe current breaking period, after the semiconductor switch is turned off.

In some embodiments, the controller is configured to determine a short-circuit point where the DC source is short-circuited to ground; and determine the short-circuit condition based on the short-circuit point of the DC source.

In some embodiments, the controller is configured to obtain an output voltage of the DC source that is short-circuited to ground; and determine the short-circuit condition based on the short-circuit point and the output voltage of the DC source.

In some embodiments, the controller is configured to obtain a present magnitude of a grid voltage; and turn off the designated relay in response to the present magnitude matching the safe current breaking period.

A short-circuit protection method for an inverter is provided in an embodiment of the present disclosure. The inverter includes a direct-current (DC) bus and an inverter circuit; the DC bus includes a DC positive bus and a DC negative bus; a semiconductor component is connected between the DC source and the DC bus; a DC side of the inverter circuit is connected to the DC bus; an alternating-current (AC) side of the inverter circuit is configured to connect a power grid via a designated relay; and the method includes: turning off the designated relay within a safe current breaking period of a short-circuit condition, in response to the short-circuit condition in which a DC line between the semiconductor component and the DC source is short-circuited to ground, or the DC source is short-circuited to ground, where during the safe current breaking period, a short-circuit current is 0 or is less than a breaking current of the designated relay.

In some embodiments, the semiconductor component is connected between a positive electrode of the DC source and a DC positive bus of the DC bus; the short-circuit condition includes that an output voltage of the DC source is less than a grid voltage, and the positive electrode of the DC source is short-circuited to ground, or a DC positive line between the semiconductor component and the positive electrode of the DC source is short-circuited to ground; and the safe current breaking period includes at least one of: a positive half-cycle period during which the grid voltage is in a positive half cycle; and a partial negative half-cycle period during which the grid voltage is in a negative half cycle and the grid voltage is less than the output voltage of the DC source.

In some embodiments, the semiconductor component is connected between a positive electrode of the DC source and a DC positive bus of the DC bus; the short-circuit condition includes that a grid voltage is greater than a difference between a positive bus voltage of the DC bus and an output voltage of the DC source, and the positive electrode of the DC source is short-circuited to ground; or, a DC positive line between the semiconductor component and the positive electrode of the DC source is short-circuited to ground; and the safe current breaking period includes at least one of: a negative half-cycle period during which the grid voltage is in a negative half cycle; and a partial positive half-cycle period during which the grid voltage is in a positive half cycle and a magnitude of the grid voltage is less than the difference between the positive bus voltage of the DC bus and the output voltage of the DC source.

In some embodiments, the semiconductor component is connected between a positive electrode of the DC source and a DC positive bus of the DC bus; and the short-circuit protection method for an inverter further includes: turning off the designated relay within a safe current breaking period of a short-circuit condition, in response to the short-circuit condition in which a negative electrode of the DC source is short-circuited to ground, or a DC negative line connected to the negative electrode of the DC source is short-circuited to ground, where the safe current breaking period includes a positive half-cycle period during which the grid voltage is in a positive half cycle.

In some embodiments, the semiconductor component is configured to form a DC-DC converter in common negative connection arranged between the DC source and the DC bus.

In some embodiments, the semiconductor component is arranged between a negative electrode of the DC source and a DC negative bus of the DC bus; the short-circuit condition includes that an output voltage of the DC source is less than a grid voltage, and the negative electrode of the DC source is short-circuited to ground; or, a DC negative line between the semiconductor component and the negative electrode of the DC source is short-circuited to ground; and the safe current breaking period includes at least one of: a negative half-cycle period during which the grid voltage is in a negative half cycle, and a partial positive half-cycle period during which the grid voltage is in a positive half cycle and a magnitude of the grid voltage is less than the output voltage.

In some embodiments, the semiconductor component is arranged between a negative electrode of the DC source and a DC negative bus of the DC bus; the short-circuit condition includes that a grid voltage is greater than a difference between a positive bus voltage of the DC bus and an output voltage of the DC source, and the negative electrode of the DC source is short-circuited to ground; or, a DC negative line between the semiconductor component and the negative electrode of the DC source is short-circuited to ground; and the safe current breaking period includes at least one of: a positive half-cycle period during which the grid voltage is in a positive half cycle, and a partial negative half-cycle period during which the grid voltage is in a negative half cycle and a magnitude of the grid voltage is less than a difference between the positive bus voltage of the DC bus and the output voltage of the DC source.

In some embodiments, the semiconductor component is arranged between a negative electrode of the DC source and a DC negative bus of the DC bus; and the method further includes: turning off the designated relay within a safe current breaking period of a short-circuit condition, in response to the short-circuit condition in which a positive electrode of the DC source is short-circuited to ground, or a DC positive line connected to the positive electrode of the DC source is short-circuited to ground, where the safe current breaking period includes a negative half-cycle period during which the grid voltage is in a negative half cycle.

In some embodiments, the semiconductor component is configured to form a DC-DC converter in common positive connection connected between the DC source and the DC bus.

In some embodiments, the short-circuit protection method for an inverter further includes: turning off the designated relay within the safe current breaking period, after at least a part of switching components in the inverter circuit is turned off.

In some embodiments, the semiconductor component is a semiconductor switch, and the short-circuit protection method for an inverter further includes: turning off the designated relay within the safe current breaking period, after the semiconductor switch is turned off.

In some embodiments, the short-circuit protection method for an inverter further includes: determining a short-circuit point where the DC source is short-circuited to ground; and determining the short-circuit condition based on the short-circuit point of the DC source.

In some embodiments, the short-circuit protection method for an inverter further includes: obtaining an output voltage of a DC source that is short-circuited to ground; and the determining the short-circuit condition based on the short-circuit point of the DC source includes: determining the short-circuit condition based on the short-circuit point and the output voltage of the DC source.

In some embodiments, the turning off the designated relay within the safe current breaking period includes: obtaining a present magnitude of a grid voltage; and turning off the designated relay in response to the present magnitude matching the safe current breaking period.

An energy system is further provided in an embodiment of the present disclosure. The energy system includes the inverter according to any one of the above embodiments, where an AC side of the inverter is configured to connect a power grid.

In some embodiments, the energy system further includes multiple DC sources; where the multiple DC sources are connected to a DC side of the inverter.

In the embodiments according to the specification, the inverter may include a DC bus, an inverter circuit and a controller. The DC bus may be configured to connect the DC source. The DC side of the inverter circuit may be connected to the DC bus, the AC side of the inverter circuit may be configured to connect a power grid via a designated relay. The controller of the inverter may turn off the relay during the safe current breaking period in a case where the DC source is short-circuited to ground and a short-circuit loop is formed by a short-circuit point where the DC source is short-circuited to ground, a phase line of the power grid and the relay. During the safe current breaking period, the current value of the short-circuit current in the short-circuit loop is 0 or approaches 0, thus avoiding damage to or reliability degradation of the relay due to breaking with current.

### BRIEF DESCRIPTION OF THE DRAWINGS

In order to more clearly illustrate technical solutions in embodiments of the present disclosure or in the conventional technology, the drawings to be used in the description of the embodiments or the conventional technology are briefly described below. Apparently, the drawings in the following description show only some embodiments of the present disclosure, and other drawings may be obtained by those skilled in the art from the drawings without any creative effort.
FIG. 1a is a schematic diagram of an inverter in an application scenario according to an embodiment of the present disclosure.
FIG. 1b is a schematic diagram of an inverter in an application scenario according to an embodiment of the present disclosure.
FIG. 1c is a schematic diagram of an inverter in an application scenario according to an embodiment of the present disclosure.
FIG. 1d is a schematic diagram of an inverter according to an embodiment of the present disclosure.
FIG. 2 is a schematic topological diagram of a photovoltaic system in a first situation according to an embodiment of the present disclosure.
FIG. 3 is a schematic diagram of a DC-DC converter in common negative connection according to an embodiment of the present disclosure.
FIG. 4a is a schematic diagram of a relationship between a grid voltage and a short-circuit current in a first situation according to an embodiment of the present disclosure.
FIG. 4b is a schematic diagram of a relationship between a grid voltage and a short-circuit current in a first situation according to an embodiment of the present disclosure.
FIG. 5 is a schematic topological diagram of an energy storage system in a first situation according to an embodiment of the present disclosure.
FIG. 6 is a schematic topological diagram of a photovoltaic system in a second situation according to an embodiment of the present disclosure.
FIG. 7a is a schematic diagram of a relationship between a grid voltage and a short-circuit current in a second situation according to an embodiment of the present disclosure.
FIG. 7b is a schematic diagram of a relationship between a grid voltage and a short-circuit current in a second situation according to an embodiment of the present disclosure.
FIG. 8 is a schematic topological diagram of an energy storage system in a second situation according to an embodiment of the present disclosure.
FIG. 9 is a schematic diagram of a DC-DC converter in common positive connection according to an embodiment of the present disclosure.
FIG. 10 is a topological diagram of an energy system in a third situation according to an embodiment of the present disclosure.
FIG. 11a is a schematic diagram of a relationship between a grid voltage and a short-circuit current in a third situation according to an embodiment of the present disclosure.
FIG. 11b is a schematic diagram of a relationship between a grid voltage and a short-circuit current in a third situation according to an embodiment of the present disclosure.
FIG. 12 is a schematic topological diagram of an energy system in a fourth situation according to an embodiment of the present disclosure.
FIG. 13a is a schematic diagram of a relationship between a grid voltage and a short-circuit current in a fourth situation according to an embodiment of the present disclosure.
FIG. 13b is a schematic diagram of a relationship between a grid voltage and a short-circuit current in a fourth situation according to an embodiment of the present disclosure.
FIG. 14 is a schematic topological diagram of a photovoltaic system in a fifth situation according to an embodiment of the present disclosure.
FIG. 15a is a schematic diagram of a relationship between a grid voltage and a short-circuit current in a fifth situation according to an embodiment of the present disclosure.
FIG. 15b is a schematic diagram of a relationship between a grid voltage and a short-circuit current in a fifth situation according to an embodiment of the present disclosure.
FIG. 16 is a topological diagram of an energy system in a sixth situation according to an embodiment of the present disclosure.
FIG. 17a is a schematic diagram of a relationship between a grid voltage and a short-circuit current in a sixth situation according to an embodiment of the present disclosure.
FIG. 17b is a schematic diagram of a relationship between a grid voltage and a short-circuit current in a sixth situation according to an embodiment of the present disclosure.
FIG. 18 is a schematic topological diagram of an energy system according to an embodiment of the present disclosure.
FIG. 19 is a schematic topological diagram of an energy system according to an embodiment of the present disclosure.
FIG. 20 is a schematic topological diagram of an energy system according to an embodiment of the present disclosure.

Reference numerals in the drawings are listed below: 100-inverter; 110-DC bus; 112-DC positive bus; 114-DC negative bus; 120-Inverter circuit; 130-designated relay; 140-DC-DC converter; 142-DC-DC converter in common negative connection; 144-DC-DC converter in common positive connection; 150-DC line; 152-DC positive line; 154-DC negative line.

### DETAILED DESCRIPTION

Hereinafter technical solutions of embodiments of the present disclosure are described clearly and completely in conjunction with the drawings of the embodiments of the present disclosure. Apparently, the embodiments described below are only some embodiments, rather than all the embodiments of the present disclosure.

In the description of the embodiments in the present disclosure, it should be understood that terms "first" and "second" are for descriptive purposes only and shall not be understood as indicating or implying relative importance or implicitly indicating quantities of indicated technical features. Therefore, a feature defined with "first" or "second" may explicitly or implicitly include one or more such feature. In the description of the embodiments in the present disclosure, "plurality (multiple)" means two or more, unless otherwise expressly and specifically limited.

In the conventional technology, a DC side of an inverter in an energy system is connected to a DC source, and an AC side of the inverter is connected to a transformer. The transformer is configured to perform voltage transformation on AC power outputted from the inverter and feed the transformed AC power into a power grid. In some embodiments, the AC side of the inverter may be connected to the transformer via an AC grid-connected cabinet.

In a case where a neutral line of the transformer is grounded, when the DC source is short-circuited to ground, the neutral line may be connected to a short-circuit point where the DC source is short-circuited to the ground through a ground line or the ground. In this case, a short-circuit loop is formed between the DC source, the inverter, and the transformer, and a large short-circuit current is generated due to a grid voltage.

Therefore, in order to reduce the risk of damage to a component in the energy system due to the short-circuit current, a controller in the energy system may first turn off at least some of switching components in the inverter circuit upon detecting the short-circuit current. Further, the controller then turns off the relay connected between the inverter and the power grid to cut off the short-circuit current.

However, prematurely turning off the relay connected between the inverter and the power grid may cause breaking with current, reducing reliability of the relay or directly damaging the switching components.

In order to avoid the problem of easily damage to the relay connected between the power grid and the inverter when the DC source or the DC line connected to the DC source is short-circuited to ground, it was found through analysis that the short-circuit current in the short-circuit loop formed due to the DC source short-circuited to ground appears periodically. Therefore, the relay connected between the inverter and the power grid may be turned off during a period when the short-circuit current in the short-circuit loop is small or no short-circuit current is generated, so as to effectively reduce the risk of damage to the relay.

The short-circuit current in the short-circuit loop is mainly generated due to the grid voltage. Moreover, before turning off the designated relay, the controller first turns off the switching components in the inverter, and thus the formed short-circuit loop includes a parasitic diode of a semiconductor switch in a bridge arm of the inverter circuit. Therefore, during a half-cycle period when a direction of the grid voltage is the same as a forward direction of the parasitic diode, the short-circuit loop is in a low-impedance state, and the grid voltage drives the short-circuit loop to generate a short-circuit current. During a half-cycle period when a direction of the grid voltage is different from the forward direction of the parasitic diode, the short-circuit loop is in a high-impedance state. In this case, it is considered that the short-circuit current in the short-circuit loop is small or no short-circuit current is generated.

Therefore, in some embodiments, turning off the designated relay connected between the inverter and the power grid during the half-cycle period when a direction of the grid voltage is opposite to the forward direction can reduce the risk of damage to the designated relay.

From further in-depth research, it was found that in some cases, the short-circuit current is not always generated throughout the half-cycle period when the direction of the grid voltage is the same as the forward direction. That is, no short-circuit current is generated during part of the half-cycle period when the direction of the grid voltage is the same as the forward direction.

For example, in a case where the short-circuit loop includes the DC source, and the short-circuit point is located at the DC source or in a DC line between the DC source or a semiconductor component, and the grid voltage is greater than an output voltage of the DC source, a short-circuit loop may be formed in which the forward direction of the parasitic diode is opposite to the direction of the output voltage of the DC source. In this case, a period during which the short-circuit current is generated is less than half a cycle of the grid voltage. In an embodiment, the period during which the short-circuit current is generated includes the part of half-cycle period when the direction of the grid voltage is the same as the forward direction of the parasitic diode, and a magnitude of the grid voltage is greater than the output voltage of the DC source. In this way, the designated relay is turned off during the part of the half-cycle period when the direction of the grid voltage is the same as the forward direction in addition to the half-cycle period when the direction of the grid voltage is opposite to the forward direction.

It takes some time to turn off the designated relay. The rapid turning off the designated relay indicates a small risk of damage to components in the energy system. Therefore, accurate determining the period during which the short-circuit current is generated in the situations and turning off the designated relay during the period without the short-circuit current can better reduce the risk of damage to the components.

From analysis on various situations in which the DC source is short-circuited to ground, it is found that the short-circuit loop formed after the DC source is short-circuited to ground may be different depending on different situations. Thereby, different short-circuit loops may correspond to different safe current breaking periods for safely breaking the current.

Based on this, in the embodiments in this specification, for different situations in which the DC source is short-circuited to ground, various short-circuit loops and the periods when the short-circuit currents in the short-circuit loops are generated are determined to determine the respective safe current breaking periods, thus better solving the technical problem of easily damage to the designated relay connected between the power grid and the inverter when the DC source is short-circuited to ground.

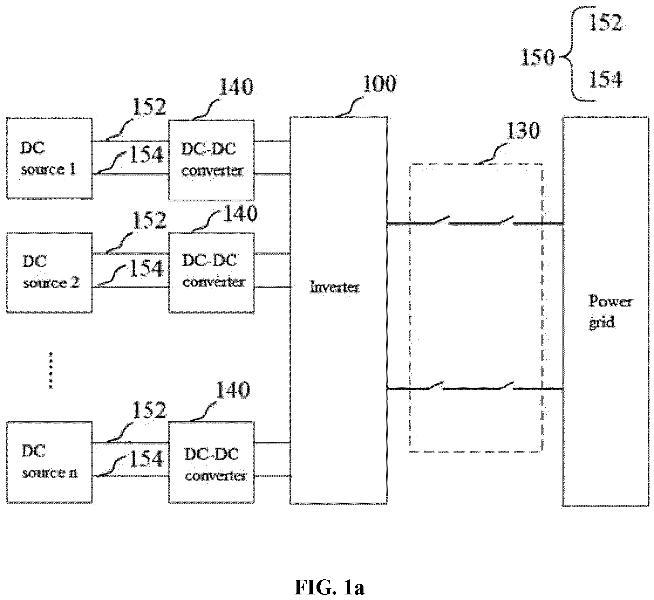

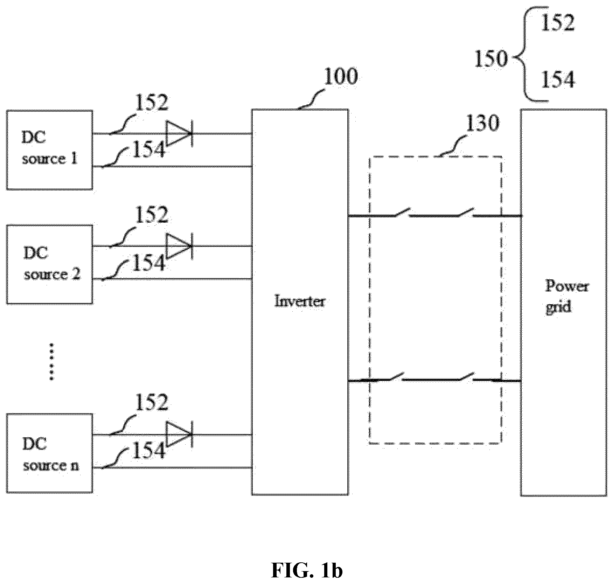

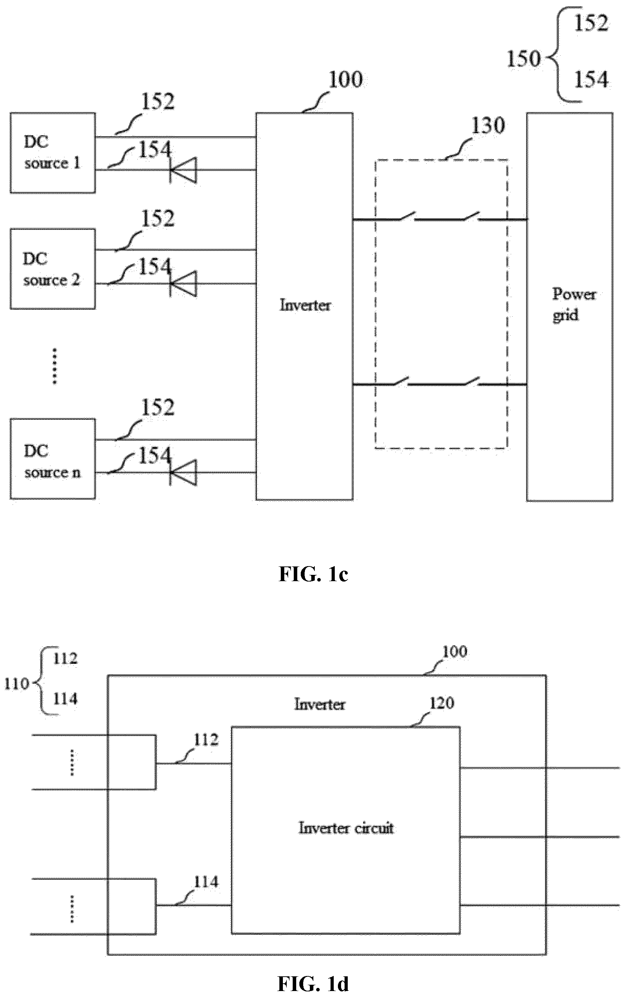

Reference is made to FIG. 1a, FIG. 1b, FIG. 1c and FIG. 1d. An inverter 100 is provided in an embodiment of the present disclosure. The inverter 100 may be applied to various energy systems to reduce a risk of damage to a designated relay 130 connected between a power grid and the inverter 100 when a DC source in the energy system is short-circuited to ground. The various energy systems may include, but are not limited to, a renewable energy power generation system, an energy storage system, or an integrated system with energy storage and renewable energy. The energy systems are not limited in the embodiment of the present disclosure.

In an embodiment, the inverter 100 in the embodiment may include a DC bus 110, an inverter circuit 120 and a controller.

The DC bus 110 serves as a line for receiving and transmitting DC power supplied by a DC source. In an embodiment, the DC bus 110 may be configured to connect the DC source to transmit the DC power supplied by the DC source to the inverter circuit 120. The DC bus 110 includes a DC positive bus 112 and a DC negative bus 114.

The DC source is a device capable of supplying DC power. For example, the DC source may be a photovoltaic panel. Alternatively, the DC source may be an energy storage battery. The DC source is not limited in the embodiment herein.

A semiconductor component is arranged between the DC source and the DC bus 110. The DC source is connected to the DC bus 110 of the inverter 100 via a DC line 150. The DC line 150 includes a DC positive line 152 and a DC negative line 154. A positive electrode of the DC source is connected to the DC positive bus 112 via the DC positive line 152. A negative electrode of the DC source is connected to the DC negative bus 114 via the DC negative line.

Referring to FIG. 1a, the semiconductor component may be a diode, a semiconductor switch or other semiconductor component of a DC-DC converter 140 arranged in the DC line 150. Alternatively, referring to FIG. 1b and FIG. 1c, the semiconductor component may be an anti-reverse diode arranged on the DC positive line 152 or the DC negative line, which is not limited in the embodiment herein.

The inverter circuit 120 may be configured to convert the DC power on the DC bus 110 into AC power. In an embodiment, a DC side of the inverter circuit 120 may be connected to the DC bus 110. An AC side of the inverter circuit 120 may be configured to connect the power grid via the designated relay 130. The designated relay 130 may be any type of relay such as an electromagnetic relay, a solid relay or a thermal relay. The type of relay is not limited in the embodiment herein.

In an embodiment, the AC side of the inverter circuit 120 may be connected to a transformer of the power grid. The transformer may be a single-phase transformer, a three-phase transformer, or the like. The type of transformer is not limited in the embodiment herein. The three-phase transformer may be implemented in star connection with neutral grounding. The single-phase transformer may be implemented by neutral grounding.

The controller of the inverter 100 may turn off the designated relay 130 within a safe current breaking period of a short-circuit condition, in response to the short-circuit condition in which the DC line 150 between the semiconductor component and the DC source is short-circuited to ground or the DC source is short-circuited to ground.

The safe current breaking period refers to a period during which a short-circuit current in a short-circuit loop is 0 or approaches 0. Alternatively, the safe current breaking period may be a period during which the short-circuit current in the short-circuit loop does not exceed a designated threshold. For example, the safe current breaking period includes not only a period during which the short-circuit current is 0, but also a period during which the short-circuit current in the short-circuit loop is not 0 and does not exceed a breaking current of the designated relay 130. The breaking current of the designated relay 130 may represent a safe current value at which the designated relay 130 can interrupt normally without being damaged. Therefore, turning off the designated relay 130 within the safe current breaking period can effectively reduce the risk of damage to the inverter 100.

In an embodiment, the controller may obtain one or more of a grid voltage, a current flowing through the designated relay 130, a voltage at an output end of the DC source, a current at the output end of the DC source, or other parameters, and thereby determine whether the DC source or the DC line 150 is short-circuited to ground. For example, the controller determines that the DC source or the DC line 150 is short-circuited to ground upon detecting that the current flowing through the designated relay 130 is greater than a preset threshold, which is not limited in the embodiment of the present disclosure.

In a case where the controller determines that the DC source is short-circuited to ground, the controller may first turn off at least some of the switching components in the inverter 100. Then, the controller may determine a safe current breaking period and turn off the designated relay 130 connected between the inverter 100 and the power grid within the safe current breaking period.

The switching component in the inverter 100 includes a semiconductor switch arranged in a bridge arm of the inverter circuit 120 of the inverter 100. The switching component in the inverter 100 includes, but is not limited to, an insulated gate bipolar transistor (IGBT) or a metal oxide semiconductor field effect transistor (MOSFET).

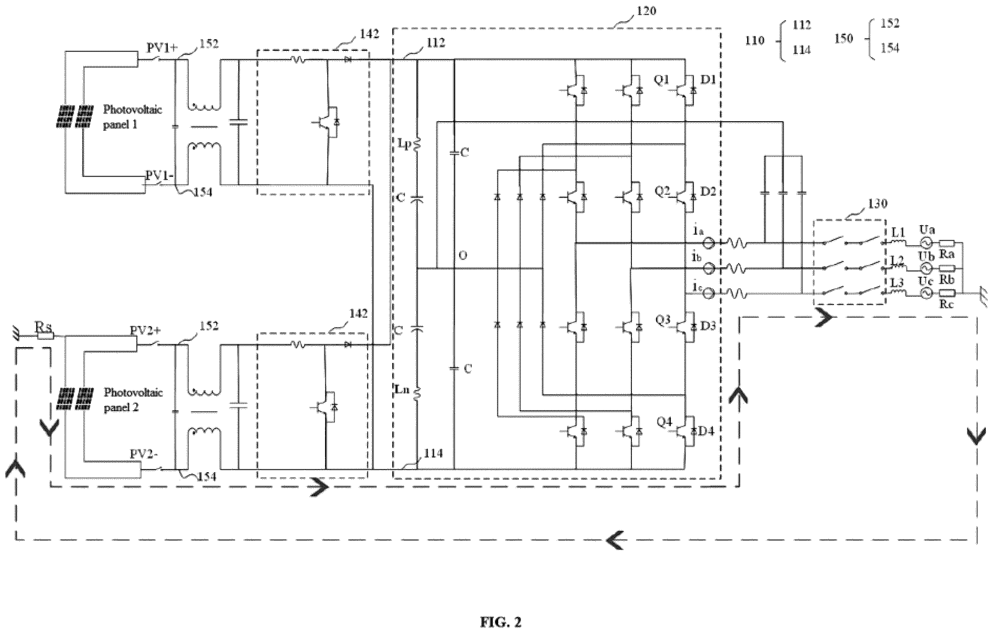

Reference is made to FIG. 2, in which a three-phase power grid is illustrated as an example. When a short-circuit current is generated in phase A, the controller may first turn off switching components Q2 and Q3 in the inverter circuit 120, and then turn off switching components Q1 and Q4. Further, the controller may turn off all switching components in the inverter circuit 120. Alternatively, the controller may directly turn off all the switching components in the inverter circuit 120, which is not limited in the embodiment herein.

As shown in FIG. 2, in a first situation according to an embodiment of the present disclosure, the semiconductor component is connected between a positive electrode of the DC source and the DC positive bus 112 of the DC bus 110. The short-circuit condition includes that an output voltage of the DC source is less than a grid voltage, and the positive electrode of the DC source is short-circuited to ground, or the DC positive line 152 between the semiconductor component and the positive electrode of the DC source is short-circuited to ground. Here, the output voltage of the DC source being less than the grid voltage includes that the output voltage of the DC source is less than a magnitude of the grid voltage.

Correspondingly, the safe current breaking period includes a positive half-cycle period during which the grid voltage is in a positive half cycle, and a partial negative half-cycle period during which the grid voltage is in a negative half cycle and the grid voltage is less than the output voltage of the DC source. Alternatively, the safe current breaking period may include a positive half-cycle period during which the grid voltage is in the positive half cycle, or the partial negative half-cycle period during which the grid voltage is in the negative half cycle and the grid voltage is less than the output voltage of the DC source.

In this case, a short-circuit loop may be formed through the DC source, and the short-circuit loop serves as a first short-circuit loop.

In an embodiment, the controller may first perform pulse blocking upon determining that the positive electrode of the DC source is short-circuited to ground, or the DC line 150 between the positive electrode of the DC source and the semiconductor component is short-circuited to ground. For example, the controller may turn off the semiconductor switch in the inverter circuit 120, or may first turn off an outer transistor (a semiconductor switch arranged on an outer side of a bridge arm) of the bridge arm of the inverter circuit 120, and then turn off an inner transistor (a semiconductor switch arranged on an inner side of the bridge arm). Hence, conduction between the short-circuit point and the power grid is realized through a freewheeling diode in the inverter circuit 120 or the parasitic diode of the semiconductor switch.

Moreover, since the semiconductor component is arranged between the DC positive bus 112 of the inverter 100 and the positive electrode of the DC source, the short-circuit current fails to directly flow from the DC positive bus 112 of the inverter 100 to the short-circuit point through the DC positive line 152. Therefore, the short-circuit current flows through the DC source, thereby forming a first short-circuit loop through the DC source.

Based on the characteristic that the grid voltage of the power grid is greater than the output voltage of the DC source in the first situation, the first short-circuit loop may include the transformer, the ground line or the earth, the DC source, the DC negative line, the DC negative bus 114 of the inverter 100, and the freewheeling diode or the parasitic diode in the lower bridge arm of the inverter circuit 120.

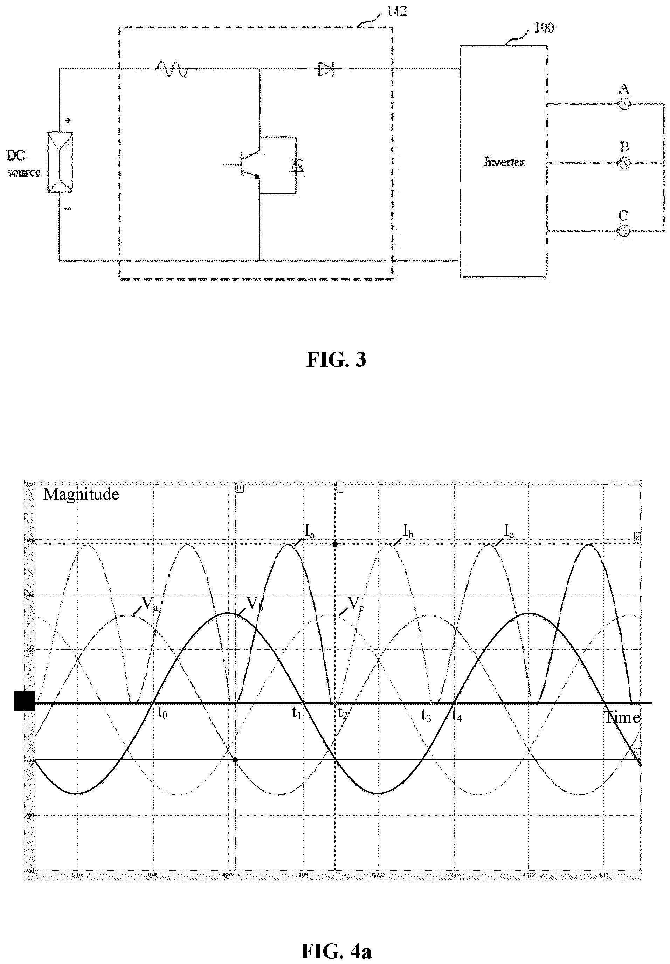

Reference is made to FIG. 3. In some embodiments, the semiconductor component is configured to form a DC-DC converter 142 in common negative connection arranged between the DC source and the DC bus 110. The semiconductor component is arranged on a positive line of the DC-DC converter 142 in common negative connection. No semiconductor component is arranged on a negative line of the DC-DC converter 142 in common negative connection. That is, two terminals of the negative line are directly connected to each other.

In an embodiment, the semiconductor component is a switching component or unidirectional conductive component (such as an anti-reverse diode) arranged separately, which is not limited in the embodiment herein.

In the first short-circuit loop, a direction of the output voltage of the DC source is opposite to the forward direction of the diode (for example, the freewheeling diode or the parasitic diode in the lower bridge arm of the inverter circuit 120) in the first short-circuit loop.

When the grid voltage is in the positive half cycle, a potential of the phase line of the transformer is higher than a potential of the ground line, that is, the designated relay 130 is connected to the positive electrode of the grid voltage, and the ground line is connected to the negative electrode of the grid voltage. In this case, a direction of the grid voltage is opposite to the forward direction of the diode in the first short-circuit loop. Therefore, after the grid voltage is superimposed with the output voltage of the DC source, a direction of an overall voltage in the first short-circuit loop is opposite to the forward direction of the diode, and thereby no short-circuit current is generated in the first short-circuit loop when the grid voltage is in the positive half cycle.

When the grid voltage is in the negative half cycle, a potential of the phase line of the transformer is lower than a potential of the ground line, that is, the designated relay 130 is connected to the negative electrode of the grid voltage, and the ground line is connected to the positive electrode of the grid voltage. In this case, in the first short-circuit loop, the direction of the grid voltage is opposite to the direction of the output voltage of the DC source.

When the grid voltage is in the negative half cycle and the magnitude of the grid voltage is less than the output voltage of the DC source, the grid voltage is offset by the output voltage of the DC source due to the magnitude of the grid voltage being less than the output voltage of the DC source. That is, after the output voltage of the DC source is superimposed with the grid voltage, the direction of an overall voltage in the first short-circuit loop is opposite to the forward direction of the diode. Therefore, no short-circuit current is generated in the first short-circuit loop when the grid voltage is in the negative half cycle and the magnitude of the grid voltage is less than the output voltage of the DC source.

When the grid voltage is in the negative half cycle and the magnitude of the grid voltage is greater than the output voltage of the DC source, after the output voltage of the DC source is superimposed with the grid voltage, the direction of the overall voltage in the first short-circuit loop is the same as the forward direction of the diode. Therefore, when the grid voltage is in the negative half cycle and the magnitude of the grid voltage is greater than the output voltage of the DC source, a first short-circuit current is generated in the first short-circuit loop due to the grid voltage.

In summary, in the first situation, the safe current breaking period may include the positive half-cycle period during which the grid voltage is in the positive half cycle, and the partial negative half-cycle period during which the grid voltage is in the negative half cycle and the magnitude of the grid voltage is less than the output voltage of the DC source.

Reference is made to FIG. 3, as an example. FIG. 3 illustrates a photovoltaic system in a first situation according to an embodiment of the present disclosure. In the embodiment, the power grid is a three-phase power grid. The DC source is a photovoltaic panel. A positive electrode of the photovoltaic panel 2 is short-circuited to ground, so that the positive electrode of the photovoltaic panel 2 is connected to the neutral line of the transformer via the ground line.

Upon determining that the photovoltaic panel 2 is short-circuited to ground, the controller of the inverter 100 may first perform pulse blocking on the inverter 100. That is, the semiconductor switches in the inverter 100 are turned off. In an embodiment, the controller may first turn off a transistor Q2, or may first turn off outer transistors (Q1, Q4), and then turn off inner transistors (Q2, Q3). Thereby, in the photovoltaic system, a first short-circuit loop between the photovoltaic panel 2 and the transformer is to be formed by parasitic diodes D3 and D4 of the semiconductor switches Q3 and Q4 in the lower bridge arm of the inverter circuit 120.

In the embodiment, a DC-DC converter 142 in common negative connection is arranged between the positive electrode of the photovoltaic panel and the inverter circuit 120. The semiconductor component is a diode in the DC-DC converter 142 in common negative connection and is connected between the positive electrode of the photovoltaic panel and the DC positive bus 112 of the inverter 100. Hence, the short-circuit current flows through the diode in the lower bridge arm connected to the phase line of the transformer, the DC negative bus 114 of the inverter 100, the DC negative line, the photovoltaic panel 2, and the ground line, forming the first short-circuit loop, rather than directly flowing through the DC positive line 152 to the short-circuit point.

The power grid in the embodiment is the three-phase power grid, and the transformer includes phase lines of phase A, phase B and phase C, which form different first short-circuit loops with the photovoltaic panel 2, respectively.

For ease of description, the first short-circuit loop formed through phase C of the power grid is described as an example. The first short-circuit current in the first short-circuit loop formed through phase C is represented as a dotted line in FIG. 2.

In an embodiment, the first short-circuit loop formed through phase C may include the phase line of phase C, the parasitic diodes D3 and D4 of the semiconductor switches Q3 and Q4 in the lower bridge arm connected to phase C, the DC negative bus 114, the DC negative line 154, the photovoltaic panel 2 and the ground line.

In the first short-circuit loop, the forward direction of the parasitic diodes D3 and D4 is opposite to the direction of the output voltage of the photovoltaic panel 2.

When the grid voltage of phase C is in the positive half cycle, the grid voltage of phase C is opposite to the forward direction of the parasitic diodes D3 and D4. Therefore, in the first situation, when the grid voltage of phase C is in the positive half cycle, it may be considered that no first short-circuit current is generated in the first short-circuit loop.

When the grid voltage of phase C is in the negative half cycle and the magnitude of the grid voltage is less than the output voltage of the photovoltaic panel 2, after the output voltage of the photovoltaic panel 2 is superimposed with the grid voltage of phase C, a direction of an overall voltage in the first short-circuit loop is opposite to the forward direction of the parasitic diodes D3 and D4. Therefore, when the grid voltage of phase C is in the negative half cycle and the magnitude of the grid voltage is less than the output voltage of the photovoltaic panel 2, it may be considered that no first short-circuit current is generated in the first short-circuit loop.

When the grid voltage of phase C is in the negative half cycle and the magnitude of the grid voltage of phase C is greater than the output voltage of the photovoltaic panel 2, after the output voltage of the photovoltaic panel 2 is superimposed with the grid voltage, a direction of an overall voltage in the first short-circuit loop is the same as the forward direction of the parasitic diodes D3 and D4. Therefore, when the grid voltage of phase C is in the negative half cycle and the magnitude of the grid voltage is greater than the output voltage of the photovoltaic panel 2, the first short-circuit current as shown by the dotted line in FIG. 2 is generated in the first short-circuit loop due to the grid voltage of phase C.

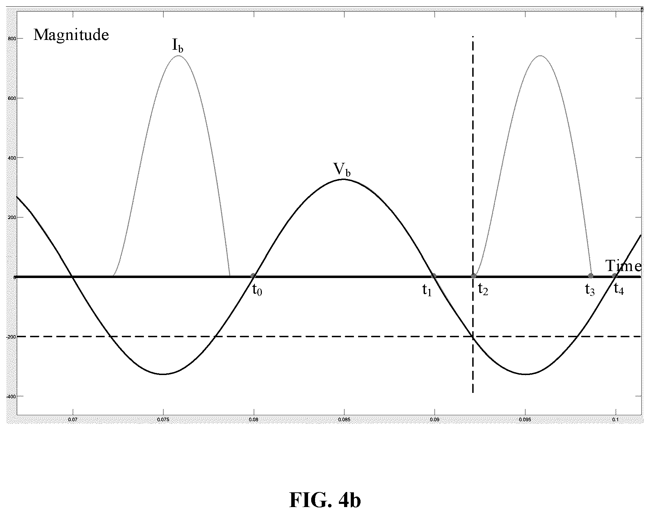

Reference is made to FIG. 4a and FIG. 4b. FIG. 4a illustrates grid voltages of phases of the power grid and periods during which a first short-circuit current flows through respective first short-circuit loops in the first situation. Here, Vₐ, V_{b} and V_{c} refer to grid voltages of phase A, phase B and phase C, respectively. Further, Iₐ, I_{b} and I_{c} refer to first short-circuit currents in first short-circuit loops formed through phase A, phase B and phase C, respectively.

By taking phase B of the power grid as an example, FIG. 4b illustrates a grid voltage and a period during which a first short-circuit current flows through the first short-circuit loop formed through phase B of the power grid. Here, a period t₀ to t₄ is a voltage cycle, as an example, and in the first short-circuit loop formed through phase B, the first short-circuit current is generated in a period t₂ to t₃. Therefore, a period t₀ to t₂ and a period t₃ to t₄ are safe current breaking periods. Specifically, a period t₀ to t₁ is a positive half-cycle period of phase B, a period t₁ to t₂ and a period t₃ to t₄ are partial negative half-cycle periods during which the grid voltage is in the negative half cycle and the grid voltage is less than the output voltage of the DC source. Thereby, the controller of the inverter 100 may turn off the designated relay 130 during the period t₀ to t₂ and the period t₃ to t₄.

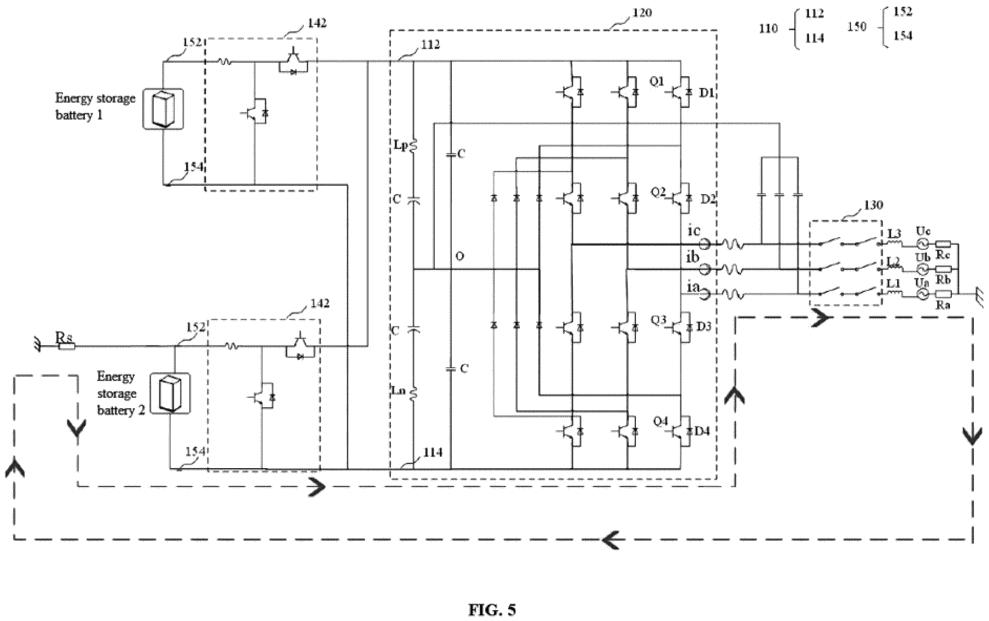

Reference is made to FIG. 5. FIG. 5 is a schematic diagram of an energy storage system in a first situation according to an embodiment of the present disclosure. In the embodiment, the power grid is the three-phase power grid. The DC source is an energy storage battery. A positive electrode of the energy storage battery 2 is short-circuited to ground, and the grid voltage is greater than an output voltage of the DC source, which conforms to the first situation. Hence, the first short-circuit current as shown by the dotted line in FIG. 5 is formed in the energy storage system in this embodiment. In this case, the safe current breaking period may include a positive half-cycle period during which the grid voltage is in the positive half cycle, and a partial negative half-cycle period during which the grid voltage is in the negative half cycle and the grid voltage is less than the output voltage of the energy storage battery 2. For detailed descriptions of the embodiment, reference may be made to other embodiments in the present disclosure, which is not described in further detail in the embodiment herein.

In a second situation according to an embodiment of the present disclosure, the semiconductor component is connected between the positive electrode of the DC source and the DC positive bus 112 of the DC bus 110; and the short-circuit condition includes that the grid voltage is greater than a difference between a positive bus voltage of the DC bus 110 and the output voltage of the DC source, and the positive electrode of the DC source is short-circuited to ground or the DC positive line 152 between the semiconductor component and the positive electrode of the DC source is short-circuited to ground. Here, the grid voltage being greater than the difference between the positive bus voltage of the DC bus 110 and the output voltage of the DC source includes that a magnitude of the grid voltage is greater than the difference between the positive bus voltage of the DC bus 110 and the output voltage of the DC source.

Correspondingly, the safe current breaking period includes a negative half-cycle period during which the grid voltage is in the negative half cycle, and a partial positive half-cycle period during which the grid voltage is in the positive half cycle and a magnitude of the grid voltage is less than a difference between the positive bus voltage of the DC bus 110 and the output voltage of the DC source. Alternatively, the safe current breaking period includes a negative half-cycle period during which the grid voltage is in the negative half cycle, or a partial positive half-cycle period during which the grid voltage is in the positive half cycle and a magnitude of the grid voltage is less than a difference between the positive bus voltage of the DC bus 110 and the output voltage of the DC source.

In this case, a short-circuit loop may be formed through the DC source, and the short-circuit loop serves as a second short-circuit loop.

In an embodiment, the controller may first perform pulse blocking upon determining that the positive electrode of the DC source is short-circuited to ground, or the DC positive line 152 between the positive electrode of the DC source and the semiconductor component is short-circuited to ground. For example, the controller may turn off the semiconductor switches in the inverter circuit 120, or may first turn off an outer transistor of a bridge arm of the inverter circuit 120 and then turn off an inner transistor. Hence, conduction between the short-circuit point and the power grid is realized through a freewheeling diode in the inverter circuit 120 or the parasitic diode of the semiconductor switch.

Moreover, since the semiconductor component is arranged between the DC positive bus 112 of the inverter 100 and the positive electrode of the DC source, the short-circuit current fails to directly flow from the DC positive bus 112 of the inverter 100 to the short-circuit point through the DC positive line 152. Therefore, the short-circuit current flows through the DC source, thereby forming a second short-circuit loop through the DC source.

Based on the characteristic that the grid voltage of the power grid is greater than a difference between the positive bus voltage of the DC bus 110 and the output voltage of the DC source in the second situation, the second short-circuit loop different from the first short-circuit loop may be formed in the energy system. The second short-circuit loop may include the transformer, the freewheeling diode or parasitic diode in the upper bridge arm of the inverter circuit 120, the DC positive bus 112 of the DC bus 110, a DC bus filter circuit connected between the DC positive bus 112 and the DC negative bus 114, the DC negative line, the DC source and the ground line.

In some embodiments, the semiconductor component is configured to form a DC-DC converter 142 in common negative connection arranged between the DC source and the DC bus 110. In an embodiment, the semiconductor component is a switching component or unidirectional conductive component (such as an anti-reverse diode) arranged separately, which is not limited in the embodiment herein.

In the second short-circuit loop, the direction of the output voltage of the DC source is the same as the forward direction of the diode (for example, the freewheeling diode or parasitic diode in the upper bridge arm of the inverter circuit 120) in the second short-circuit loop. In addition, a direction of a DC bus voltage across the DC bus filter circuit is opposite to the forward direction of the diode of the second short-circuit loop. The DC bus voltage across the DC bus filter circuit is the positive bus voltage of the DC positive bus 112. In the conventional technology, the output voltage of the DC source does not exceed the DC bus voltage, and therefore the output voltage of the DC source is offset by the DC bus voltage. That is, a direction of a voltage obtained by superimposing the output voltage of the DC source with the DC bus voltage is opposite to the forward direction of the diode.

When the grid voltage is in the negative half cycle, a potential of the phase line of the transformer is lower than a potential of the ground line, that is, the designated relay 130 is connected to the negative electrode of the grid voltage, and the ground line is connected to the positive electrode of the grid voltage. In this case, a direction of the grid voltage is opposite to a forward direction of the diode in the second short-circuit loop. Therefore, after the output voltage of the DC source, the DC bus voltage and the grid voltage are superimposed with each other, a direction of an overall voltage in the second short-circuit loop is opposite to the forward direction of the diode, and thereby no short-circuit current is generated in the second short-circuit loop when the grid voltage is in the negative half cycle.

When the grid voltage is in the positive half cycle, a potential of the phase line of the transformer is higher than a potential of the ground line, that is, the designated relay 130 is connected to the positive electrode of the grid voltage, and the ground line is connected to the negative electrode of the grid voltage. In this case, in the second short-circuit loop, the direction of the grid voltage is the same as the direction of the output voltage of the DC source, and is opposite to the direction of the DC bus voltage.

When the grid voltage is in the positive half cycle and the grid voltage is less than a difference between the positive bus voltage of the DC bus 110 and the output voltage of the DC source, the output voltage of the DC source and the grid voltage are both offset by the DC bus voltage. That is, after the output voltage of the DC source, the DC bus voltage of the DC bus filter circuit, and the grid voltage are superimposed with each other, a direction of an overall voltage in the second short-circuit loop is opposite to the forward direction of the diode. Therefore, no short-circuit current is generated in the second short-circuit loop when the grid voltage is in the positive half cycle and the magnitude of the grid voltage is less than the difference between the positive bus voltage of the DC bus 110 and the output voltage of the DC source.

When the grid voltage is in the positive half cycle and the magnitude of the grid voltage is greater than the difference between the positive bus voltage of the DC bus 110 and the output voltage of the DC source, after the output voltage of the DC source, the DC bus voltage of the DC bus filter circuit, and the grid voltage are superimposed with each other, a direction of an overall voltage in the second short-circuit loop is the same as the forward direction of the diode. Therefore, when the grid voltage is in the positive half cycle and the magnitude of the grid voltage is greater than the difference between the positive bus voltage of the DC bus 110 and the output voltage of the DC source, the second short-circuit current is generated in the second short-circuit loop due to the grid voltage.

In summary, in the second situation, the safe current breaking period may include a negative half-cycle period, and a partial positive half-cycle period during which the magnitude of the grid voltage is less than the difference between the positive bus voltage of the DC bus 110 and the output voltage of the DC source.

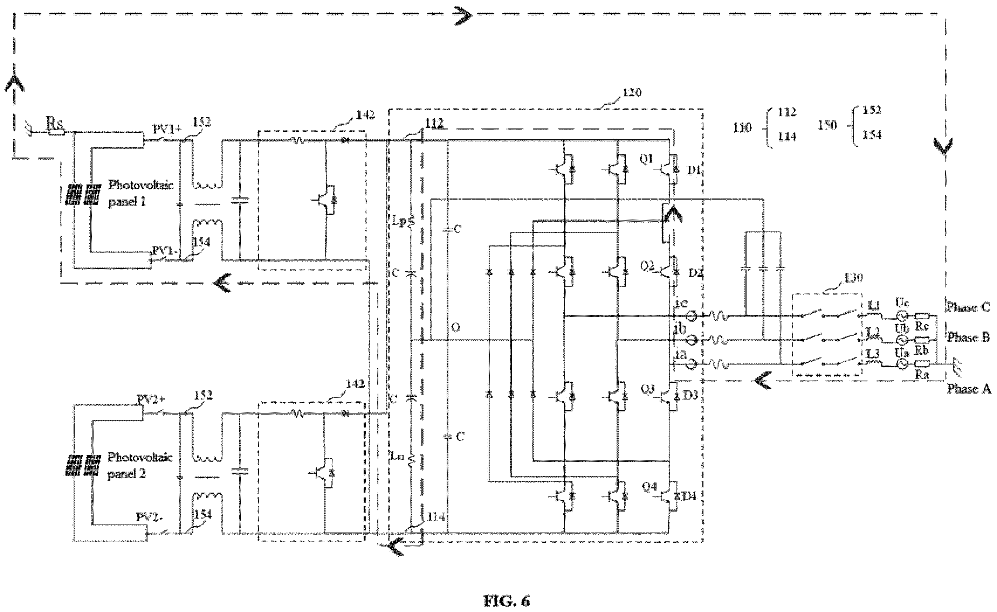

Reference is made to FIG. 6, as an example. FIG. 6 illustrates a photovoltaic system in a second situation according to an embodiment of the present disclosure. In the embodiment, the power grid is a three-phase power grid. The DC source is a photovoltaic panel. A positive electrode of the photovoltaic panel 1 is short-circuited to ground, so that the positive electrode of the photovoltaic panel 1 is connected to the neutral line of the transformer via the ground line.

Upon determining that the photovoltaic panel 1 is short-circuited to ground, the controller of the inverter 100 may first perform pulse blocking on the inverter 100. That is, the semiconductor switches in the inverter 100 are turned off. In an embodiment, the controller may first turn off a transistor Q3, or may first turn off outer transistors (Q1, Q4) and then turn off inner transistors (Q2, Q3). Thereby, in the photovoltaic system, a second short-circuit loop between the photovoltaic panel 1 and the transformer is to be formed by parasitic diodes D1 and D2 of the semiconductor switches Q1 and Q2 in the upper bridge arm of the inverter circuit 120.

In the embodiment, a DC-DC converter 142 in common negative connection is arranged between the positive electrode of the photovoltaic panel and the inverter circuit 120. The semiconductor component is a diode in the DC-DC converter 142 in common negative connection and is connected between the positive electrode of the photovoltaic panel and the DC positive bus 112 of the inverter 100. Hence, the short-circuit loop flows through the diode in the upper bridge arm connected to the phase line of the transformer, the DC positive bus 112 of the inverter 100, the DC bus filter circuit, the DC negative line, the photovoltaic panel 1, and the ground line, forming the second short-circuit loop, rather than directly flowing through the DC positive line 152 to the short-circuit point.

The power grid in the embodiment is the three-phase power grid, and the transformer includes phase lines of phase A, phase B and phase C, which form different second short-circuit loops with the photovoltaic panel 1, respectively.

For ease of description, the second short-circuit loop formed through phase A of the power grid is described as an example. The second short-circuit current in the second short-circuit loop formed through phase A is represented as a dotted line in FIG. 6.

In an embodiment, the second short-circuit loop formed through phase A may include the phase line of phase A, the parasitic diodes D1 and D2 of the semiconductor switches Q1 and Q2 in the upper bridge arm connected to phase A, the DC positive bus 112, the DC bus filter circuit, the DC negative line, the photovoltaic panel 1 and the ground line. The DC bus filter circuit may include a capacitor, an inductor, and other component, that is connected between the DC positive bus 112 and the DC negative bus 114. For example, the DC bus filter circuit in FIG. 6 includes capacitors C and inductors Lp and Ln which are connected between the DC positive bus 112 and the DC negative bus 114, which is not limited in the embodiment of the present disclosure.

In the second short-circuit loop, the forward direction of the parasitic diodes D1 and D2 in the second short-circuit loop is the same as the direction of the output voltage of the photovoltaic panel 1. In addition, the direction of the DC bus voltage across the DC bus filter circuit is opposite to the forward direction of the parasitic diodes D1 and D2 of the second short-circuit loop. The DC bus voltage across the DC bus filter circuit is the positive bus voltage of the DC positive bus 112. In the conventional technology, the output voltage of the DC source does not exceed the DC bus voltage, and therefore the output voltage of the DC source is offset by the DC bus voltage.

When the grid voltage of phase A is in the negative half cycle, a direction of the grid voltage of phase A is opposite to the forward direction of the parasitic diodes D1 and D2 in the second short-circuit loop. Therefore, when the grid voltage of phase A is in the negative half cycle, it may be considered that no second short-circuit current is generated in the second short-circuit loop.

When the grid voltage of phase A is in the positive half cycle and the grid voltage of phase A is less than a difference between the positive bus voltage of the DC bus 110 and the output voltage of the DC source, after the output voltage of the photovoltaic panel 1, the DC bus voltage of the DC bus filter circuit, and the grid voltage of phase A are superimposed with each other, a direction of an overall voltage in the second short-circuit loop is opposite to the forward direction of the parasitic diodes D1 and D2. Therefore, no short-circuit current is generated in the second short-circuit loop when the grid voltage is in the positive half cycle and the magnitude of the grid voltage is less than the difference between the positive bus voltage of the DC bus 110 and the output voltage of the photovoltaic panel 1.

When the grid voltage of phase A is in the positive half cycle and a magnitude of the grid voltage of phase A is greater than a difference between the positive bus voltage of the DC bus 110 and the output voltage of the DC source, after the output voltage of the photovoltaic panel 1, the DC bus voltage of the DC bus filter circuit, and the grid voltage of phase A are superimposed with each other, a direction of an overall voltage in the second short-circuit loop is the same as the forward direction of the parasitic diodes D1 and D2 in the second short-circuit loop. Therefore, when the grid voltage of phase A is in the positive half cycle and the magnitude of the grid voltage is greater than the difference between the positive bus voltage of the DC bus 110 and the output voltage of the photovoltaic panel 1, the second short-circuit current is generated in the second short-circuit loop due to the grid voltage.

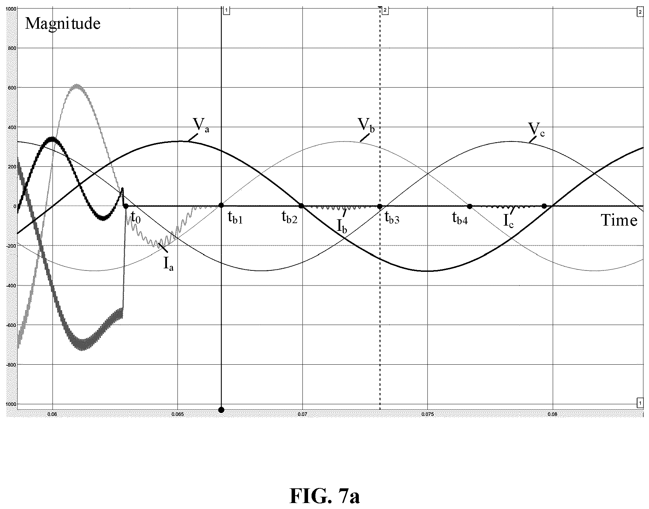

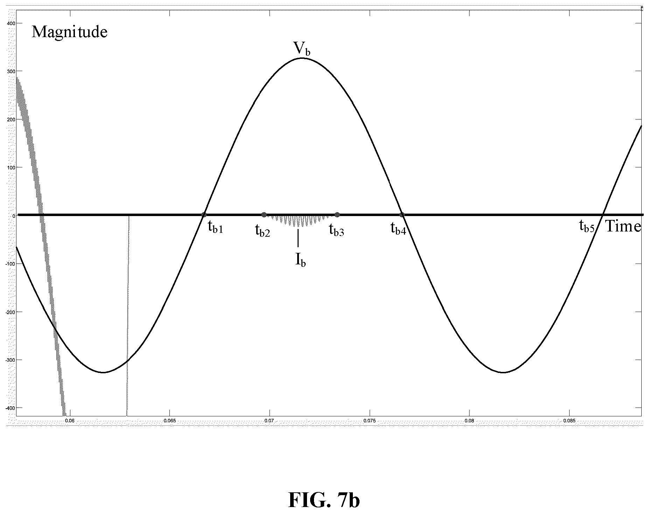

Reference is made to FIG. 7a and FIG. 7b. FIG. 7a illustrates grid voltages of phases of the power grid and periods during which a second short-circuit current flows through second short-circuit loops respectively. Pulse blocking is performed at a time instant t₀.

By taking phase B of the grid as an example, FIG. 7b illustrates a grid voltage and a period during which a second short-circuit current flows through the second short-circuit loop formed through phase B of the power grid. After pulse blocking, in the second short-circuit loop formed by phase B, no short-circuit current is generated when the grid voltage of phase B is in a negative half cycle. When the grid voltage of phase B is in a positive half cycle, the second short-circuit current is generated during a period t_{b2} to t_{b3}. The positive half-cycle period is a period t_{b1} to t_{b4}.

In summary, in the second situation, the safe current breaking period for a second short-circuit loop of phase A is a partial positive half-cycle period during which the grid voltage is in the negative half cycle, and a magnitude of the grid voltage is less than a difference between the positive bus voltage of the DC bus 110 and the output voltage of the DC source.

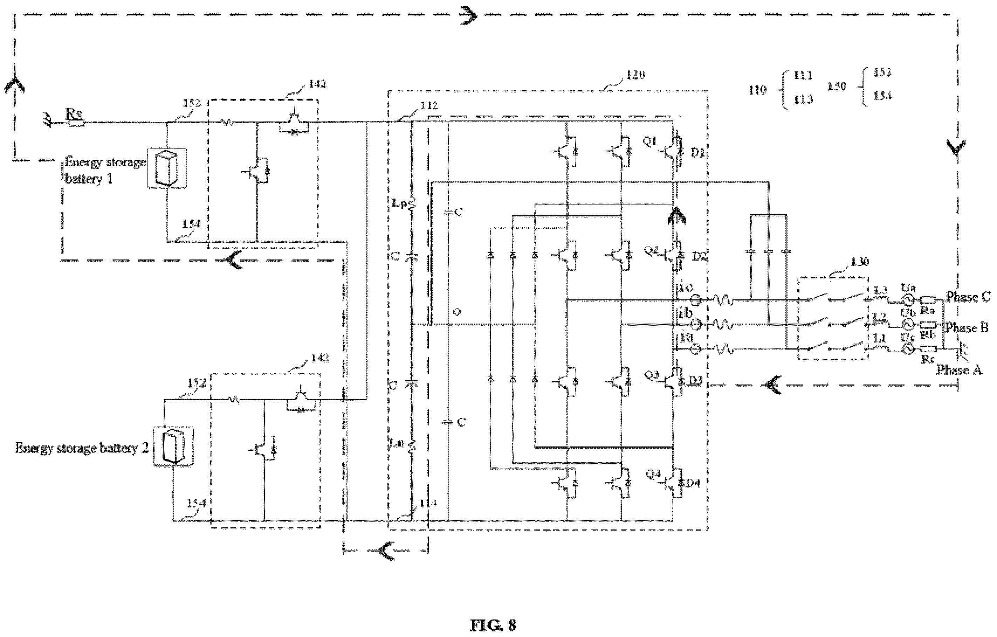

Reference is made to FIG. 8. FIG. 8 illustrates an energy storage system in a second situation according to an embodiment of the present disclosure. In the embodiment, the power grid is a three-phase power grid. The DC source is an energy storage battery. A positive electrode of the energy storage battery 1 is short-circuited to ground, and the grid voltage of the power grid is greater than a difference between a positive bus voltage of the DC bus and an output voltage of the DC source, which conforms to the second situation. Hence, a second short-circuit current as shown by the dotted line in FIG. 8 is formed in the energy storage system in this embodiment. Correspondingly, in this embodiment, the safe current breaking period includes a negative half-cycle period, and a partial positive half-cycle period during which a magnitude of the grid voltage is less than a difference between the positive bus voltage of the DC bus and the output voltage of the energy storage battery 1. For detailed descriptions of the embodiment, reference may be made to other embodiments in the present disclosure, which is not described in detail in the embodiment herein.

In a third situation according to an embodiment of the present disclosure, the semiconductor component is arranged between a negative electrode of the DC source and the DC negative bus 114 of the DC bus 110; and the short-circuit condition includes that an output voltage of the DC source is less than a grid voltage, and the negative electrode of the DC source is short-circuited to ground, or the DC negative line between the semiconductor component and the negative electrode of the DC source is short-circuited to ground. Here, the output voltage of the DC source being less than the grid voltage includes that the output voltage of the DC source is less than a magnitude of the grid voltage.

Correspondingly, the safe current breaking period includes a negative half-cycle period during which the grid voltage is in the negative half cycle, and a partial positive half-cycle period during which the grid voltage is in the positive half cycle and a magnitude of the grid voltage is less than the output voltage. Alternatively, the safe current breaking period includes a negative half-cycle period during which the grid voltage is in the negative half cycle, or a partial positive half-cycle period during which the grid voltage is in the positive half cycle and a magnitude of the grid voltage is less than the output voltage.

In this case, a short-circuit loop may be formed through the DC source, and the short-circuit loop serves as a third short-circuit loop.

In an embodiment, the controller may first perform pulse blocking upon determining that the negative electrode of the DC source is short-circuited to ground, or the DC line 150 between the negative electrode of the DC source and the semiconductor component is short-circuited to ground. For example, the controller may turn off the semiconductor switches in the inverter circuit 120, or may first turn off an outer transistor of a bridge arm of the inverter circuit 120, and then turn off an inner transistor. Hence, conduction between the short-circuit point and the power grid is realized through a freewheeling diode in the inverter circuit 120 or the parasitic diode of the semiconductor switch.

Moreover, since the semiconductor component is arranged between the DC negative bus 114 of the inverter 100 and the negative electrode of the DC source, the short-circuit current fails to directly flow from the DC negative bus 114 of the inverter 100 to the short-circuit point through the DC negative line. Therefore, the short-circuit current flows through the DC source, thereby forming a third short-circuit loop through the DC source.

Based on the characteristic that the grid voltage of the power grid is greater than the output voltage of the DC source in the third situation, the third short-circuit loop may include the transformer, the freewheeling diode or parasitic diode in the upper bridge arm of the inverter circuit 120, the DC positive line 152, the DC positive bus 112 of the inverter 100, the DC source, and the ground line or the earth.

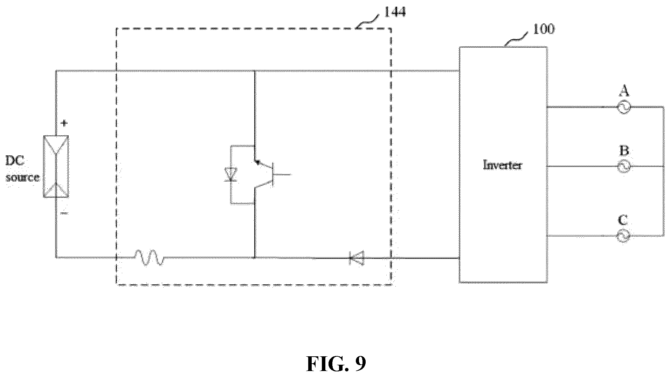

Reference is made to FIG. 9. In some embodiments, the semiconductor component is configured to form a DC-DC converter 144 in common positive connection arranged between the DC source and the DC bus 110. The semiconductor component is arranged on a negative line of the DC-DC converter 144 in common positive connection. No semiconductor component is arranged on a positive line of the DC-DC converter 144 in common positive connection. That is, two terminals of the positive line are directly connected to each other.

In an embodiment, the semiconductor component is a switching component or unidirectional conductive component (such as an anti-reverse diode) arranged separately, which is not limited in the embodiment herein.

In the third short-circuit loop, the direction of the output voltage of the DC source is opposite to the forward direction of the diode (for example, the freewheeling diode or parasitic diode in the upper bridge arm of the inverter circuit 120) in the third short-circuit loop.

When the grid voltage is in the negative half cycle, a potential of the phase line of the transformer is lower than a potential of the ground line, that is, the designated relay 130 is connected to the negative electrode of the grid voltage, and the ground line is connected to the positive electrode of the grid voltage. In this case, a direction of the grid voltage is opposite to a forward direction of the diode in the third short-circuit loop. Therefore, after the grid voltage is superimposed with the output voltage of the DC source, a direction of an overall voltage in the third short-circuit loop is opposite to the forward direction of the diode, and thereby no short-circuit current is generated in the third short-circuit loop when the grid voltage is in the negative half cycle.

When the grid voltage is in the positive half cycle, a potential of the phase line of the transformer is higher than a potential of the ground line, that is, the designated relay 130 is connected to the positive electrode of the grid voltage, and the ground line is connected to the negative electrode of the grid voltage. In this case, in the third short-circuit loop, the direction of the grid voltage is opposite to the direction of the output voltage of the DC source.

When the grid voltage is in the positive half cycle and the magnitude of the grid voltage is less than the output voltage of the DC source, the grid voltage is offset by the output voltage of the DC source due to the magnitude of the grid voltage being less than the output voltage of the DC source. That is, after the output voltage of the DC source is superimposed with the grid voltage, a direction of an overall voltage in the third short-circuit loop is opposite to the forward direction of the diode. Therefore, no short-circuit current is generated in the third short-circuit loop when the grid voltage is in the positive half cycle and the magnitude of the grid voltage is less than the output voltage of the DC source.

When the grid voltage is in the positive half cycle and the magnitude of the grid voltage is greater than the output voltage of the DC source, after the output voltage of the DC source is superimposed with the grid voltage, the direction of the overall voltage in the third short-circuit loop is the same as the forward direction of the diode. Therefore, when the grid voltage is in the positive half cycle and the magnitude of the grid voltage is greater than the output voltage of the DC source, the third short-circuit current is generated in the third short-circuit loop due to the grid voltage.

In summary, in the third situation, the safe current breaking period may include the negative half-cycle period during which the grid voltage is in the negative half cycle, and the partial positive half-cycle period during which the grid voltage is in the positive half cycle and the magnitude of the grid voltage is less than the output voltage.

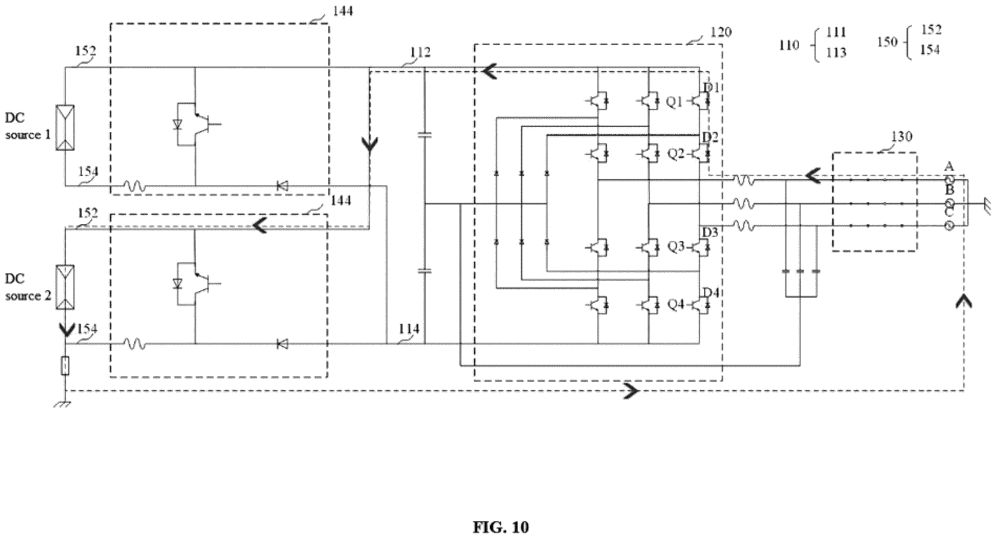

Reference is made to FIG. 10, as an example. FIG. 10 illustrates an energy system in a third situation according to an embodiment of the present disclosure. In the embodiment, the power grid is a three-phase power grid. The DC source is an energy storage battery. A negative electrode of the DC source 2 is short-circuited to ground, so that the negative electrode of the DC source 2 is connected to the neutral line of the power grid via the ground line.

Upon determining that the DC source 2 is short-circuited to ground, the controller of the inverter 100 may first perform pulse blocking on the inverter 100. That is, the semiconductor switches in the inverter 100 are turned off. In an embodiment, the controller may first turn off a transistor Q3, or may first turn off outer transistors (Q1, Q4), and then turn off inner transistors (Q2, Q3). Thereby, in the energy system, a third short-circuit loop between the DC source 2 and the transformer is to be formed through parasitic diodes D1 and D2 of the semiconductor switch in the upper bridge arm of the inverter circuit 120.

In the embodiment, a DC-DC converter 144 in common positive connection is arranged between the positive electrode of the energy storage battery and the inverter circuit 120. The semiconductor component is a diode in the DC-DC converter 144 in common positive connection and is connected to a negative line. Hence, the short-circuit loop flows through the diode in the upper bridge arm connected to the phase line of the transformer, the DC positive bus 112 of the inverter 100, the DC positive line 152, the DC source 2, and the ground line, forming the third short-circuit loop, rather than directly flowing through the DC negative line to the short-circuit point.

The power grid in the embodiment is a three-phase power grid, and therefore phase A, phase B and phase C of the power grid may form different third short-circuit loops with the DC source 2, respectively.

For ease of description, the third short-circuit loop formed through phase A of the power grid is described as an example. The third short-circuit current in the third short-circuit loop formed through phase A is represented as a dotted line in FIG. 10.

In the third short-circuit loop, the forward direction of the parasitic diodes D1 and D2 is opposite to the direction of the output voltage of the DC source 2.

When the grid voltage of phase A is in the negative half cycle, a direction of the grid voltage of phase A is opposite to the forward direction of the parasitic diodes D1 and D2. Therefore, in the third situation, when the grid voltage of phase A is in the negative half cycle, it may be considered that no third short-circuit current is generated in the third short-circuit loop.

When the grid voltage of phase A is in the positive half cycle and the magnitude of the grid voltage is less than the output voltage of the DC source 2, after the output voltage of the DC source 2 is superimposed with the grid voltage of phase A, a direction of an overall voltage in the third short-circuit loop is opposite to the forward direction of the parasitic diodes D1 and D2. Therefore, when the grid voltage of phase A is in the positive half cycle and the magnitude of the grid voltage is less than the output voltage of the DC source 2, it may be considered that no third short-circuit current is generated in the third short-circuit loop.

When the grid voltage of phase A is in the positive half cycle and the magnitude of the grid voltage of phase A is greater than the output voltage of the DC source 2, after the output voltage of the DC source 2 is superimposed with the grid voltage, a direction of an overall voltage in the third short-circuit loop is the same as the forward direction of the parasitic diodes D1 and D2. Therefore, when the grid voltage of phase A is in the positive half cycle and the magnitude of the grid voltage is greater than the output voltage of the DC source, the third short-circuit current is generated in the third short-circuit loop due to the grid voltage of phase A.

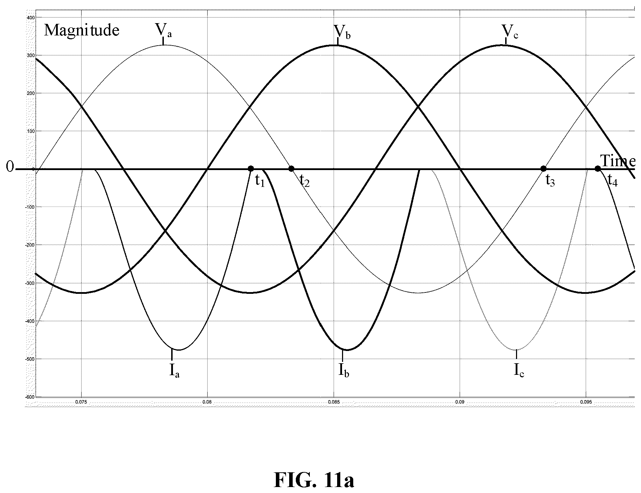

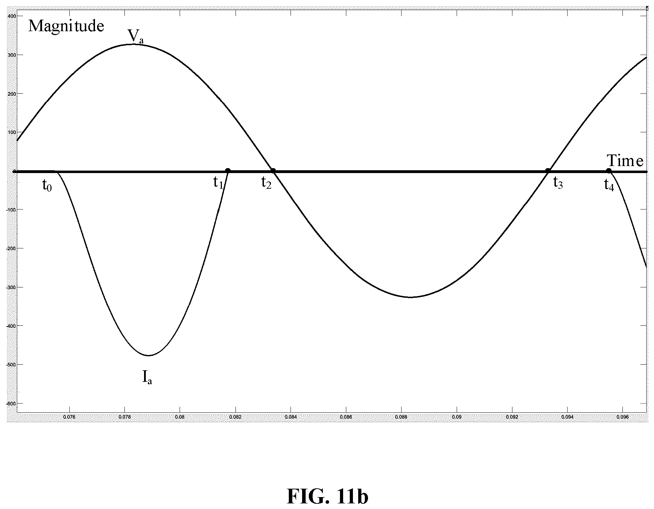

Reference is made to FIG. 11a and FIG. 11b. FIG. 11a illustrates grid voltages of phases of the power grid and periods during which a third short-circuit current flows through respective third short-circuit loops after pulse blocking. By taking phase A of the power grid as an example, FIG. 11b illustrates a grid voltage and a period during which a third short-circuit current flows through a third short-circuit loop formed through phase A of the power grid. The third short-circuit loop is generated during a period t₀ to t₁. Therefore, a period t₁ to t₄ is a safe current breaking period. Specifically, the grid voltage of phase A is in a negative half cycle during a period t₂ to t₃; and the grid voltage of phase A is in a positive half cycle during a period t₁ to t₂ and a period t₃ to t₄, during which the grid voltage of phase A is less than the output voltage of the DC source, referred to as a partial positive half-cycle period. Thereby, the controller of the inverter 100 may turn off the designated relay 130 during the period t₁ to t₄.

In a fourth situation according to an embodiment of the present disclosure, the semiconductor component is arranged between the negative electrode of the DC source and the DC negative bus 114 of the DC bus 110; and the short-circuit condition includes that the grid voltage is greater than a difference between the positive bus voltage of the DC bus 110 and the output voltage of the DC source, and the negative electrode of the DC source is short-circuited to ground, or the DC negative line between the semiconductor component and the negative electrode of the DC source is short-circuited to ground. Here, the grid voltage being greater than a difference between the positive bus voltage of the DC bus 110 and the output voltage of the DC source includes that a magnitude of the grid voltage is greater than a difference between the positive bus voltage of the DC bus 110 and the output voltage of the DC source.

Correspondingly, the safe current breaking period includes a positive half-cycle period during which the grid voltage is in the positive half cycle, and a partial negative half-cycle period during which the grid voltage is in the negative half cycle and a magnitude of the grid voltage is less than the difference between the positive bus voltage of the DC bus 110 and the output voltage of the DC source. Alternatively, the safe current breaking period includes either a positive half-cycle period during which the grid voltage is in the positive half cycle, or a partial negative half-cycle period during which the grid voltage is in the negative half cycle and a magnitude of the grid voltage is less than the difference between the positive bus voltage of the DC bus 110 and the output voltage of the DC source.

In this case, a short-circuit loop may be formed through the DC source, and the short-circuit loop serves as a fourth short-circuit loop.

In an embodiment, the controller may first perform pulse blocking upon determining that the negative electrode of the DC source, or the DC negative line between the negative electrode of the DC source and the semiconductor component is short-circuited to ground. For example, the controller may turn off the semiconductor switch in the inverter circuit 120, or may first turn off an outer transistor of a bridge arm of the inverter circuit 120, and then turn off an inner transistor. Hence, conduction between the short-circuit point of the DC source and the power grid is realized through a freewheeling diode in the inverter circuit 120 or the parasitic diode of the semiconductor switch.

Moreover, since the semiconductor component is arranged between the DC negative bus 114 of the inverter 100 and the negative electrode of the DC source, the short-circuit current fails to directly flow from the DC negative bus 114 of the inverter 100 to the short-circuit point through the DC negative line 154. Therefore, the short-circuit current flows through the DC source, thereby forming a fourth short-circuit loop through the DC source.

Based on the characteristic that the grid voltage of the power grid is greater than a difference between the positive bus voltage of the DC bus 110 and the output voltage of the DC source in the fourth situation, the fourth short-circuit loop may include the transformer, the ground line or the earth, the DC source, the DC positive line 152, the DC bus filter circuit, the DC negative bus 114 of the inverter 100, and the freewheeling diode or the parasitic diode in the lower bridge arm of the inverter circuit 120.

In some embodiments, the semiconductor component is configured to form a DC-DC converter 144 in common positive connection arranged between the DC source and the DC bus 110. In an embodiment, the semiconductor component is a switching component or unidirectional conductive component (such as an anti-reverse diode) arranged separately, which is not limited in the embodiment herein.

In the fourth short-circuit loop, the direction of the output voltage of the DC source is the same as the forward direction of the diode (for example, the freewheeling diode or parasitic diode in the lower bridge arm of the inverter circuit 120) in the fourth short-circuit loop. In addition, the direction of the DC bus voltage across the DC bus filter circuit is opposite to the forward direction of the diode of the fourth short-circuit loop. The DC bus voltage across the DC bus filter circuit is the positive bus voltage of the DC positive bus 112. In the conventional technology, the output voltage of the DC source does not exceed the DC bus voltage, and therefore the output voltage of the DC source is offset by the DC bus voltage. That is, a direction of a voltage obtained by superimposing the output voltage of the DC source with the DC bus voltage is opposite to the forward direction of the diode.

When the grid voltage is in the positive half cycle, a potential of the phase line of the transformer is higher than a potential of the ground line, that is, the designated relay 130 is connected to the positive electrode of the grid voltage, and the ground line is connected to the negative electrode of the grid voltage. In this case, a direction of the grid voltage is opposite to a forward direction of the diode in the fourth short-circuit loop. Therefore, after the output voltage of the DC source, the DC bus voltage and the grid voltage are superimposed with each other, a direction of an overall voltage in the fourth short-circuit loop is opposite to the forward direction of the diode, and thereby no short-circuit current is generated in the fourth short-circuit loop when the grid voltage is in the positive half cycle.

When the grid voltage is in the negative half cycle, a potential of the phase line of the transformer is lower than a potential of the ground line, that is, the designated relay 130 is connected to the negative electrode of the grid voltage, and the ground line is connected to the positive electrode of the grid voltage. In this case, in the fourth short-circuit loop, the direction of the grid voltage is the same as the direction of the output voltage of the DC source, and is opposite to the direction of the DC bus voltage.

When the grid voltage is in a negative half cycle and the grid voltage is less than a difference between the positive bus voltage of the DC bus 110 and the output voltage of the DC source, the grid voltage and the output voltage of the DC source are both offset by the DC bus voltage due to the grid voltage being less than the difference between the positive bus voltage of the DC bus 110 and the output voltage of the DC source. That is, after the output voltage of the DC source, the DC bus voltage of the DC bus filter circuit, and the grid voltage are superimposed with each other, a direction of an overall voltage in the fourth short-circuit loop is opposite to the forward direction of the diode. Therefore, no short-circuit current is generated in the fourth short-circuit loop when the grid voltage is in the negative half cycle and the magnitude of the grid voltage is less than the difference between the positive bus voltage of the DC bus 110 and the output voltage of the DC source.

When the grid voltage is in the negative half cycle and a magnitude of the grid voltage is greater than a difference between the positive bus voltage of the DC bus 110 and the output voltage of the DC source, after the output voltage of the DC source, the DC bus voltage of the DC bus filter circuit, and the grid voltage are superimposed with each other, a direction of an overall voltage is the same as the forward direction of the diode in the fourth short-circuit loop. Therefore, when the grid voltage is in the negative half cycle and the magnitude of the grid voltage is greater than the difference between the positive bus voltage of the DC bus 110 and the output voltage of the DC source, the fourth short-circuit current is generated in the fourth short-circuit loop due to the grid voltage.

In summary, in the fourth situation, the safe current breaking period may include a positive half-cycle period, and a partial negative half-cycle period during which the magnitude of the grid voltage is less than the difference between the positive bus voltage of the DC bus 110 and the output voltage of the DC source.

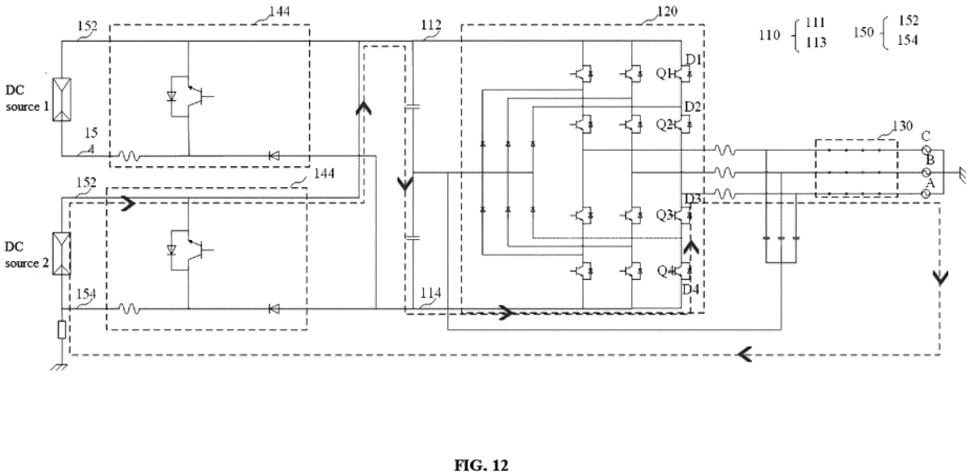

Reference is made to FIG. 12, as an example. FIG. 12 illustrates an energy system in a fourth situation according to an embodiment of the present disclosure. In the embodiment, the power grid is a three-phase power grid. The DC source is an energy storage battery. A negative electrode of the DC source 2 is short-circuited to ground, so that the negative electrode of the DC source 2 is connected to the neutral line of the transformer via the ground line.

Upon determining that the DC source 2 is short-circuited to ground, the controller of the inverter 100 may first perform pulse blocking on the inverter 100. That is, the semiconductor switches in the inverter 100 are turned off. In an embodiment, the controller may first turn off a transistor Q2, or may first turn off outer transistors (Q1, Q4), and then turn off inner transistors (Q2, Q3). Thereby, in the energy system, a fourth short-circuit loop between the DC source 2 and the transformer is to be formed through parasitic diodes D1 and D2 of the semiconductor switches Q3 and Q4 in the lower bridge arm of the inverter circuit 120.

In the embodiment, a DC-DC converter 144 in common positive connection is arranged between the positive electrode of the photovoltaic panel and the inverter circuit 120. The semiconductor component is a diode in the DC-DC converter 144 in common positive connection and is connected between the negative electrode of the energy storage battery and the DC negative bus 114 of the inverter 100. Hence, the short-circuit current flows through the diode in the upper bridge arm connected to the phase line of the transformer, the DC positive bus 112 of the inverter 100, the DC bus filter circuit, the DC negative line, the DC source 2, and the ground line, forming the fourth short-circuit loop, rather than directly flowing through the DC negative line to the short-circuit point.

The power grid in the embodiment is a power three-phase grid, and the transformer includes phase lines of phase A, phase B and phase C, which form different fourth short-circuit loops with the DC source 2, respectively.

For ease of description, the fourth short-circuit loop formed through phase A of the power grid is described as an example. The fourth short-circuit current in the fourth short-circuit loop formed through phase A is represented as a dotted line in FIG. 12.

In an embodiment, the fourth short-circuit loop formed through phase A may include the phase line of phase A, the parasitic diodes D3 and D4 of the semiconductor switches Q3 and Q4 in the lower bridge arm connected to phase A, the DC negative bus 114, the DC bus filter circuit, the DC positive line 152, the DC source 2 and the ground line.

In the fourth short-circuit loop, the direction of the output voltage of the DC source 2 is the same as the forward direction of the parasitic diodes D3 and D4 in the fourth short-circuit loop. In addition, the direction of the DC bus voltage across the DC bus filter circuit is opposite to the forward direction of the parasitic diodes D3 and D4 of the fourth short-circuit loop. The DC bus voltage across the DC bus filter circuit is the positive bus voltage of the DC positive bus 112. In the conventional technology, the output voltage of the DC source does not exceed the DC bus voltage, and therefore the output voltage of the DC source is offset by the DC bus voltage.

When the grid voltage of phase A is in the positive half cycle, a direction of the grid voltage of phase A is opposite to the forward direction of the parasitic diodes D3 and D4 in the fourth short-circuit loop. Therefore, when the grid voltage of phase A is in the positive half cycle, it may be considered that no fourth short-circuit current is generated in the fourth short-circuit loop.

When the grid voltage of phase A is in the negative half cycle and the grid voltage of phase A is less than a difference between the positive bus voltage of the DC bus 110 and the output voltage of the DC source, after the output voltage of the DC source 2, the DC bus voltage of the DC bus filter circuit, and the grid voltage of phase A are superimposed with each other, a direction of an overall voltage in the fourth short-circuit loop is opposite to the forward direction of the parasitic diodes D1 and D2. Therefore, no short-circuit current is generated in the fourth short-circuit loop when the grid voltage is in the negative half cycle and the magnitude of the grid voltage is less than the difference between the positive bus voltage of the DC bus 110 and the output voltage of the DC source 2.

When the grid voltage of phase A is in the negative half cycle and a magnitude of the grid voltage of phase A is greater than a difference between the positive bus voltage of the DC bus 110 and the output voltage of the DC source, after the output voltage of the DC source 2, the DC bus voltage of the DC bus filter circuit, and the grid voltage of phase A are superimposed with each other, a direction of an overall voltage in the fourth short-circuit loop is the same as the forward direction of the parasitic diodes D1 and D2. Therefore, when the grid voltage of phase A is in the negative half cycle and the magnitude of the grid voltage is greater than the difference between the positive bus voltage of the DC bus 110 and the output voltage of the DC source 2, the fourth short-circuit current is generated in the fourth short-circuit loop due to the grid voltage.

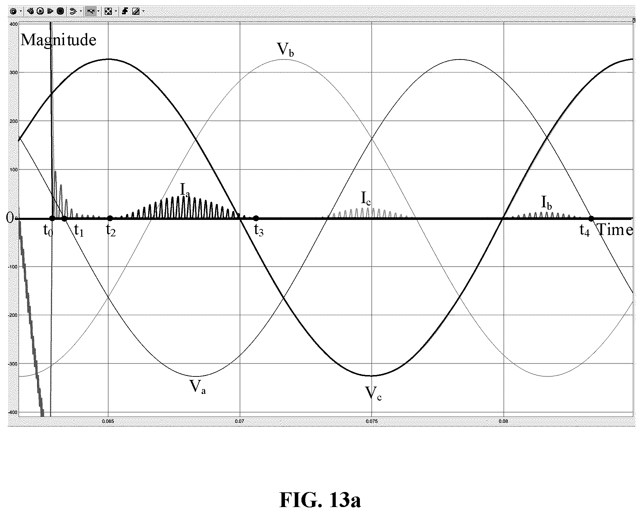

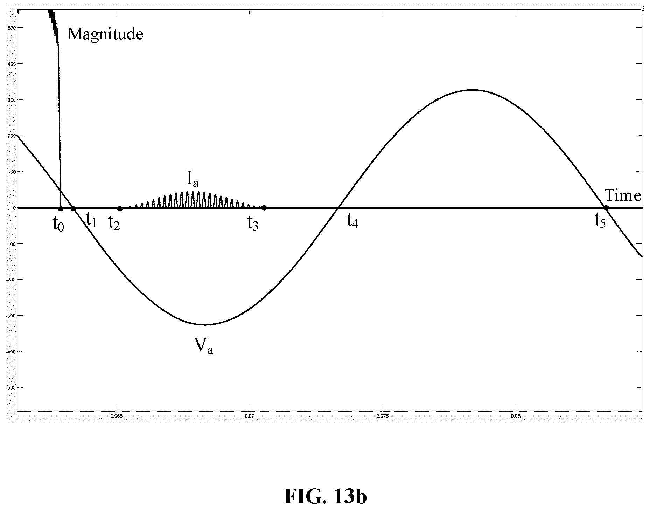

Reference is made to FIG. 13a and FIG. 13b. FIG. 13a illustrates grid voltages of phases of the power grid and periods during which a fourth short-circuit current flows through respective fourth short-circuit loops. Pulse blocking is performed at a time instant t₀.

By taking phase A of the power grid as an example, FIG. 13b illustrates a grid voltage and a period during which a fourth short-circuit current flows through a fourth short-circuit loop formed through phase A of the power grid. A period t₁ to t₅ serves as a voltage cycle, as an example. After the pulse blocking, in the fourth short-circuit loop formed through phase A, the grid voltage of phase A is in a positive half cycle during a period t₄ to t₅, and no short-circuit current is generated during this period. When the grid voltage of phase A is in a negative half cycle during a period t₁ to t₄, a fourth short-circuit current is generated during a period t₂ to t₃.

In a fifth situation according to an embodiment of the present disclosure, the semiconductor component is connected between a positive electrode of the DC source and the DC positive bus 112 of the DC bus 110. The controller is further configured to turn off the designated relay 130 within a safe current breaking period of a short-circuit condition, in response to the short-circuit condition in which a negative electrode of the DC source is short-circuited to ground or a DC negative line connected to the negative electrode of the DC source is short-circuited to ground, where the safe current breaking period includes a positive half-cycle period during which the grid voltage is in a positive half cycle.

In this situation, a short-circuit loop excluding the DC source may be formed, and the short-circuit loop serves as a fifth short-circuit loop.

In an embodiment, the controller may first perform pulse blocking upon determining that the negative electrode of the DC source is short-circuited to ground, or the DC negative line connected to the negative electrode of the DC source is short-circuited to ground. For example, the controller may turn off the semiconductor switches in the inverter circuit 120, or may first turn off an outer transistor of a bridge arm of the inverter circuit 120, and then turn off an inner transistor. Hence, conduction between the short-circuit point and the power grid is realized through a freewheeling diode in the inverter circuit 120 or the parasitic diode of the semiconductor switch.

Moreover, no semiconductor component is arranged between the negative electrode of the DC source and the DC negative line connected to the negative electrode of the DC source. Therefore, the short-circuit current directly flows through the DC negative line to the short-circuit point, thereby forming a fifth short-circuit loop.

In an embodiment, the fifth short-circuit loop may be formed through the phase line of the transformer, the ground line or the earth, the short-circuit point, the DC negative line 154, the DC negative bus 114 and the diode in the lower bridge arm connected to the phase line.

The fifth short-circuit loop excludes the DC source, so that the fifth short-circuit current in the fifth short-circuit loop is generated due to the grid voltage.

When the grid voltage is in a positive half cycle, a direction of the grid voltage is opposite to a forward direction of the diode in the fifth short-circuit loop. Therefore, it may be considered that no fifth short-circuit current is generated in the fifth short-circuit loop.

When the grid voltage is in a negative half cycle, a direction of the grid voltage is the same as the forward direction of the diode in the fifth short-circuit loop. Therefore, it may be considered that the fifth short-circuit current may be generated due to the grid voltage when the grid voltage is in the negative half cycle.

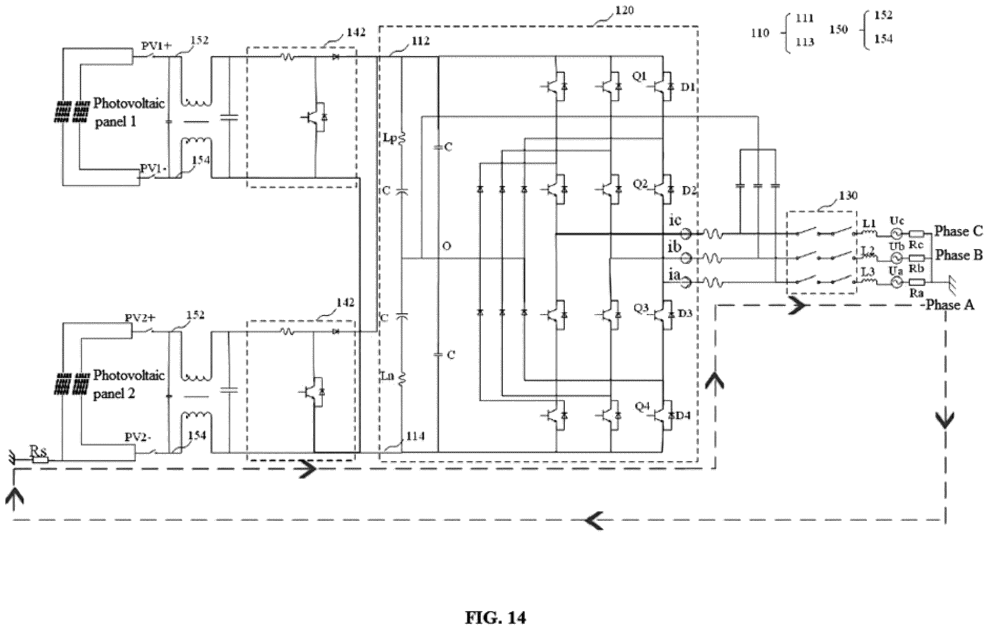

Reference is made to FIG. 14. FIG. 14 illustrates a photovoltaic system in a fifth situation according to an embodiment of the present disclosure. The DC source is a photovoltaic panel. The DC source is connected to the inverter 100 through a DC-DC converter 142 in common negative connection. A negative electrode of the photovoltaic panel 2 is short-circuited to ground, so that the negative electrode of the photovoltaic panel 2 is connected to the neutral line of the transformer via the ground line.

The fifth short-circuit loop may include the transformer, the ground line, the DC negative line, the DC negative bus 114 of the inverter 100, and the parasitic diode in the lower bridge arm of the inverter circuit 120.

When the grid voltage is in the positive half cycle, a direction of the grid voltage is different from a forward direction of the diode in the fifth short-circuit loop. Therefore, it may be considered that no short-circuit current is generated in the fifth short-circuit loop when the grid voltage is in the positive half cycle.

When the grid voltage is in a negative half cycle, a direction of the grid voltage is the same as a forward direction of the diode in the fifth short-circuit loop. Due to the grid voltage, the fifth short-circuit current may flow from the short-circuit point at the negative electrode of the photovoltaic panel 2, the DC negative bus 114, and the parasitic diodes of the semiconductor switches Q3 and Q4 sequentially and returns to the short-circuit point through the earth. Therefore, it may be considered that the fifth short-circuit current is generated in the fifth short-circuit loop when the grid voltage is in the negative half cycle.

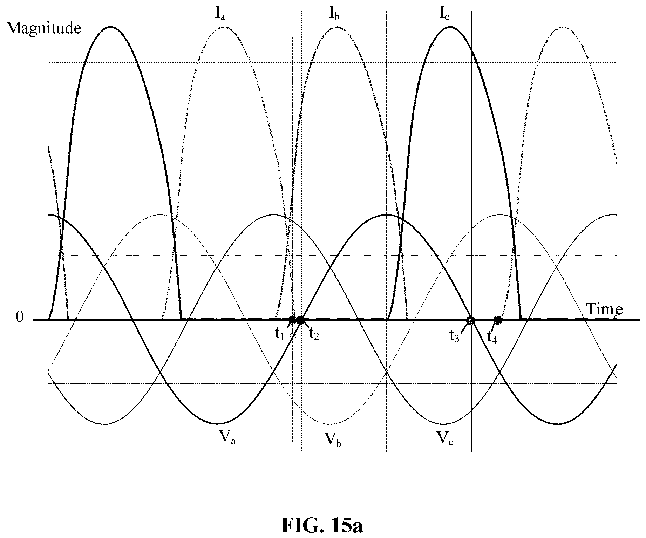

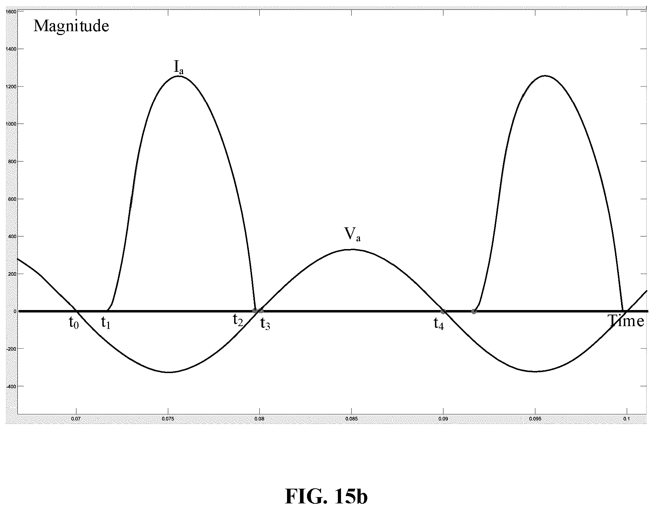

Reference is made to FIG. 15a and FIG. 15b. FIG. 15a illustrates grid voltages of phases of the power grid and periods during which a fifth short-circuit current flows through respective fifth short-circuit loops after pulse blocking. By taking phase A of the power grid as an example, FIG. 15b illustrates a grid voltage and a period during which a fifth short-circuit current flows through a fifth short-circuit loop formed through phase A of the power grid after pulse blocking. A period t₀ to t₄ serves as a voltage cycle, as an example. During a period t₀ to t₃, a voltage of phase A is in the negative half cycle, and a fifth short-circuit current Iₐ is generated during a period t₁ to t₂. During a period t₃ to t₄, the voltage of phase A is in the positive half cycle, and the fifth short-circuit current Iₐ due to the voltage of phase A is not generated.

In a sixth situation according to an embodiment of the present disclosure, a semiconductor component is arranged between a negative electrode of the DC source and a DC negative bus 114 of the DC bus 110; the controller is further configured to turn off the designated relay 130 within a safe current breaking period of a short-circuit condition, in response to the short-circuit condition in which a positive electrode of the DC source is short-circuited to ground or a DC positive line 152 connected to the positive electrode of the DC source is short-circuited to ground, where the safe current breaking period includes a negative half-cycle period during which the grid voltage is in a negative half cycle.

In this situation, a short-circuit loop excluding the DC source may be formed, and the short-circuit loop serves as a sixth short-circuit loop.

In an embodiment, the controller may first perform pulse blocking upon determining that the positive electrode of the DC source is short-circuited to ground, or the DC positive line 152 connected to the positive electrode of the DC source is short-circuited to ground. For example, the controller may turn off the semiconductor switches in the inverter circuit 120, or may first turn off an outer transistor of a bridge arm of the inverter circuit 120, and then turn off an inner transistor. Hence, conduction between the short-circuit point and the power grid is realized through a freewheeling diode in the inverter circuit 120 or the parasitic diode of the semiconductor switch.

In this situation, no semiconductor component is arranged between the positive electrode of the DC source and the DC negative line connected to the positive electrode of the DC source. Therefore, the short-circuit current directly flows through the DC positive line 152 to the short-circuit point, thereby forming a sixth short-circuit loop.

In an embodiment, the sixth short-circuit loop may be formed through the phase line of the power grid, the ground line or the earth, the short-circuit point, the DC positive line 152, the DC positive bus 112 and the diode in the upper bridge arm connected to the phase line.

The sixth short-circuit loop excludes the DC source, so that the sixth short-circuit current in the sixth short-circuit loop is generated mainly due to the grid voltage.

When the grid voltage is in a negative half cycle, a direction of the grid voltage is opposite to a forward direction of the diode in the sixth short-circuit loop. Therefore, it may be considered that no sixth short-circuit current is generated in the sixth short-circuit loop.

When the grid voltage is in a positive half cycle, a direction of the grid voltage is the same as a forward direction of the diode in the sixth short-circuit loop. Therefore, it may be considered that the sixth short-circuit current may be generated due to the grid voltage when the grid voltage is in the positive half cycle.

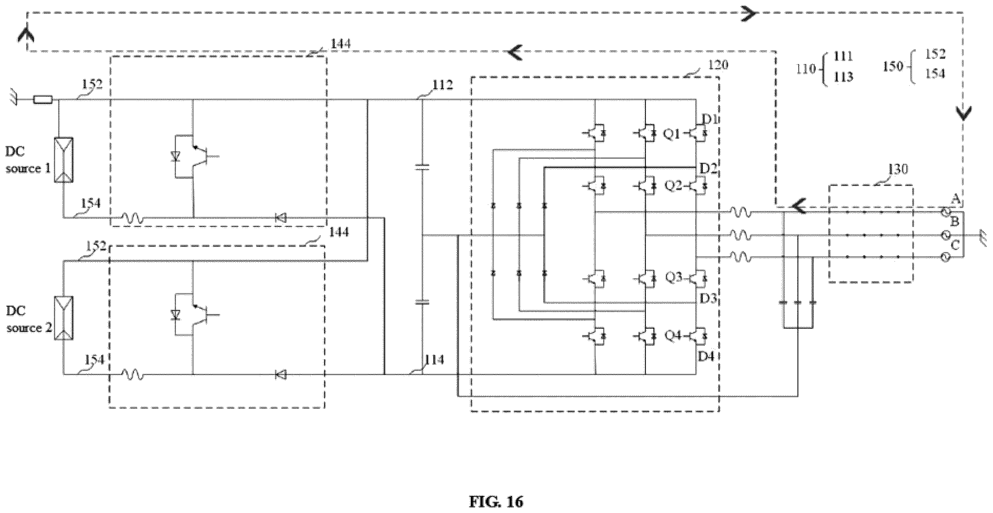

Reference is made to FIG. 16. FIG. 16 illustrates an energy system in a sixth situation according to an embodiment of the present disclosure. The DC source is connected to the inverter 100 through a DC-DC converter 144 in common positive connection. A positive electrode of the DC source 1 is short-circuited to ground, and thereby is connected to a neutral line of the power grid via a ground line.

The sixth short-circuit loop may include the transformer, the freewheeling diode in the upper bridge arm connected to the phase line, the DC positive bus 112, the DC positive line 152, and the ground line.

When the grid voltage is in a negative half cycle, a direction of the grid voltage is different from a forward direction of the diode in the fifth short-circuit loop. Therefore, it may be considered that no short-circuit current is generated in the sixth short-circuit loop when the grid voltage is in the negative half cycle.

When the grid voltage is in a positive half cycle, a direction of the grid voltage is the same as a forward direction of the diode in the sixth short-circuit loop. In an embodiment, the sixth short-circuit current may flow through the parasitic diodes of the semiconductor switches Q1 and Q2 via the phase line, and the DC positive bus 112, the short-circuit point of the positive electrode of the DC source 1, the earth, and the neutral line sequentially. Therefore, it may be considered that the sixth short-circuit current is generated due to the grid voltage when the grid voltage is in the positive half cycle.

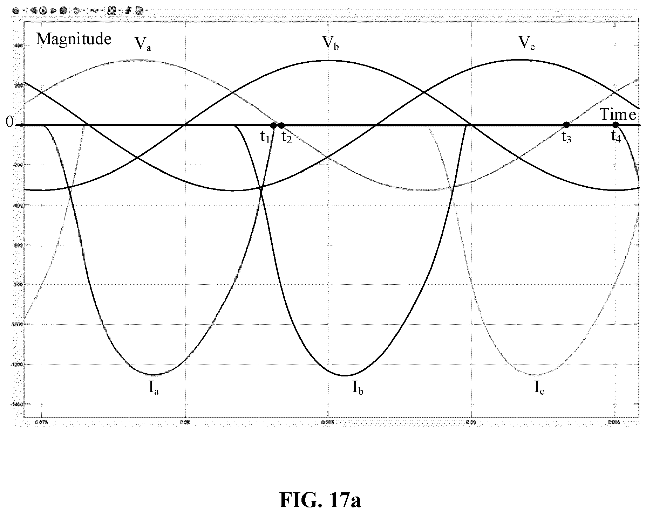

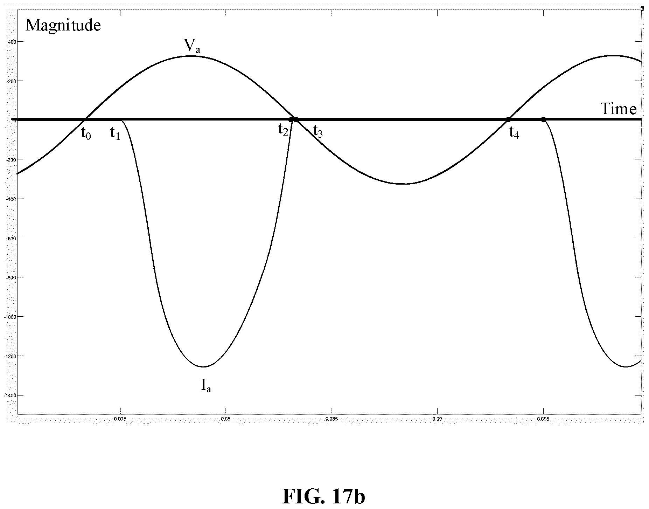

Reference is made to FIG. 17a and FIG. 17b. FIG. 17a illustrates grid voltages of phases of the power grid and periods during which a sixth short-circuit current flows through respective sixth short-circuit loops after pulse blocking. By taking phase A of the power grid as an example, FIG. 17b illustrates a grid voltage and a period during which a sixth short-circuit current flows through a sixth short-circuit loop formed through phase A of the power grid. A period t₀ to t₄ serves as a voltage cycle, as an example. During a period t₀ to t₃, a voltage Vₐ of phase A is in a positive half cycle, and a sixth short-circuit current Iₐ is generated during a period t₁ to t₂. During a period t₃ to t₄, the voltage Vₐ of phase A is in a negative half cycle, and the sixth short-circuit current Iₐ due to the voltage of phase A is not generated.

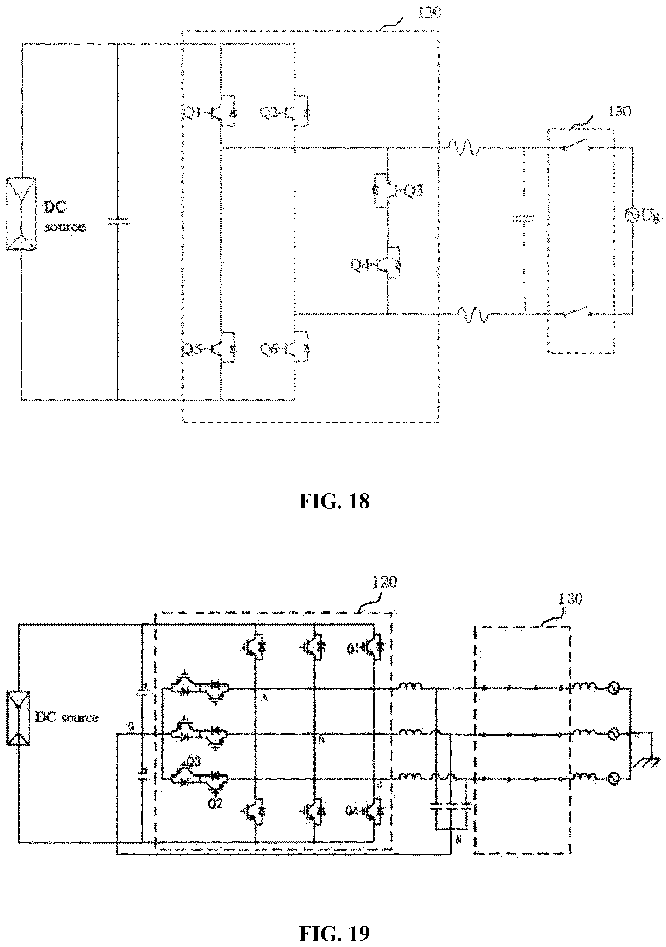

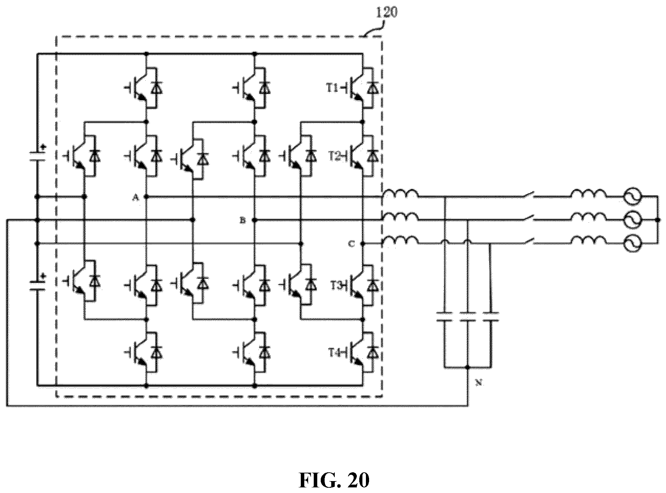

In some embodiments, the inverter 100 according to the embodiments of the present disclosure may be implemented in any inverter topology. For example, reference is made to FIG. 18, FIG. 19, and FIG. 20. The inverter topology of the inverter circuit 120 may be a single-phase inverter topology, a T-type inverter topology or an ANPC-type inverter topology. The inverter topology is not limited in the embodiments of the present disclosure.

In some embodiments, the freewheeling diode of a bridge arm of the inverter circuit 120 may be not only implemented by parasitic diode of the semiconductor switch, but also implemented by a diode connected in parallel with the semiconductor switch. The implementation manner of the freewheeling diode is not limited in the embodiment of the present disclosure.

In some embodiments, the safe current breaking period may be detected by a current sensor. Alternatively, the safe current breaking period may be calculated based on a circuit characteristic. The determination manner of the safe current breaking period is not limited in the embodiment of the present disclosure.

In some embodiments, the controller is configured to turn off the designated relay 130 within the safe current breaking period, after turning off at least a part of switching components in the inverter circuit 120. In an embodiment, the controller may first perform pulse blocking. For example, the controller may turn off all switching components in the inverter circuit 120. Alternatively, the controller may turn off one or more of multiple switching components connected in series on each bridge arm, which is not limited in the embodiment herein.

In some embodiments, the semiconductor component is a semiconductor switch. The controller is further configured to turn off the designated relay 130 within the safe current breaking period, after turning off the semiconductor switch.

In some DC-DC converters 140, the semiconductor switch is provided to achieve conversion of DC power. Therefore, upon detecting the short-circuit current, the controller may turn off the semiconductor switch, preventing expansion of the short-circuit current.

In some embodiments, the controller is configured to determine a short-circuit point where the DC source is short-circuited to ground; and determine the short-circuit condition based on the short-circuit point of the DC source.

Different locations of short-circuit points cause different short-circuit conditions. Therefore, upon detecting the short-circuit current, the controller may first determine the short-circuit point where the DC source is short-circuited to ground, and further determine the short-circuit condition based on the short-circuit point of the DC source. In an embodiment, the controller may determine a location of the short-circuit point by detecting a potential difference between the positive electrode or negative electrode of the DC source and the ground line. Alternatively, the controller may determine a location of the short-circuit point by detecting a current at the output end of the DC source or a current flowing through the DC line 150. The determination manner of the location of the short-circuit point is not limited in the embodiment herein.

In some embodiments, the controller is configured to obtain an output voltage of a DC source that is short-circuited to ground; and determine the short-circuit condition based on the short-circuit point and the output voltage of the DC source.

Different relationship between the output voltage of the DC source and the magnitude of the grid voltage cause different short-circuit conditions. The voltage of the DC source may vary during operation of the energy system. For example, in a case where the DC source is an energy storage battery, the output voltage of the energy storage battery may change as a state of charge of the energy storage battery changes. In a case where the DC source is a photovoltaic panel, the output voltage of the photovoltaic panel may change due to a light intensity. Therefore, the controller determines the short-circuit condition, that is, determine a situation in which the short-circuit to ground occurs, by obtaining the output voltage of the DC source that is short-circuited to ground, and based on a relationship between the output voltage of the DC source and the magnitude of the grid voltage, and in combination with the location of the short-circuit point and the location of the semiconductor component in the energy system. Further, the controller may determine a safe current breaking period and turn off the designated relay 130 within the safe current breaking period.

In some embodiments, the controller is configured to obtain a present magnitude of the grid voltage; and turn off the designated relay 130 in a case where the present magnitude matches the safe current breaking period.

Different short-circuit conditions correspond to different safe current breaking periods. Therefore, the controller may obtain the present magnitude of the grid voltage by acquiring the grid voltage in a real time manner. In addition, the designated relay 130 is turned off in a case where the present magnitude matches the safe current breaking period. For example, the safe current breaking period includes a period during which the grid voltage is in the positive half cycle, and the present magnitude obtained by the controller is positive, the designated relay 130 may be turned off within the safe current breaking period.

A short-circuit protection method for an inverter is further provided in an embodiment of the present disclosure. The inverter includes a DC bus and an inverter circuit; the DC bus includes a DC positive bus and a DC negative bus; a semiconductor component is connected between the DC source and the DC bus; a DC side of the inverter circuit is connected to the DC bus; an AC side of the inverter circuit is configured to connect a power grid via a designated relay. The method includes: turning off the designated relay within a safe current breaking period of a short-circuit condition in response to the short-circuit condition in which a DC line between the semiconductor component and the DC source is short-circuited to ground, or the DC source is short-circuited to ground, where during the safe current breaking period, a short-circuit current is 0 or less than a breaking current of the designated relay.

In some embodiments, the semiconductor component is connected between a positive electrode of the DC source and a DC positive bus of the DC bus; the short-circuit condition includes that an output voltage of the DC source is less than a grid voltage, and the positive electrode of the DC source is short-circuited to ground, or a DC positive line between the semiconductor component and the positive electrode of the DC source is short-circuited to ground; and the safe current breaking period includes a positive half-cycle period during which the grid voltage is in a positive half cycle, and/or a partial negative half-cycle period during which the grid voltage is in a negative half cycle and the grid voltage is less than the output voltage of the DC source.

In some embodiments, the semiconductor component is connected between a positive electrode of the DC source and a DC positive bus of the DC bus; the short-circuit condition includes that a grid voltage is greater than a difference between a positive bus voltage of the DC bus and an output voltage of the DC source, and the positive electrode of the DC source is short-circuited to ground, or a DC positive line between the semiconductor component and the positive electrode of the DC source is short-circuited to ground; and the safe current breaking period includes a negative half-cycle period during which the grid voltage is in a negative half cycle, and/or a partial positive half-cycle period during which the grid voltage is in a positive half cycle and a magnitude of the grid voltage is less than a difference between the positive bus voltage of the DC bus and the output voltage of the DC source.

In some embodiments, the semiconductor component is connected between a positive electrode of the DC source and a DC positive bus of the DC bus; the short-circuit protection method for an inverter further includes: turning off the designated relay within a safe current breaking period of a short-circuit condition in response to the short-circuit condition in which a negative electrode of the DC source is short-circuited to ground or a DC negative line connected to the negative electrode of the DC source is short-circuited to ground, where the safe current breaking period includes a positive half-cycle period during which the grid voltage is in a positive half cycle.

In some embodiments, the semiconductor component is configured to form a DC-DC converter in common negative connection arranged between the DC source and the DC bus.

In some embodiments, the semiconductor component is arranged between a negative electrode of the DC source and the DC negative bus of the DC bus; and the short-circuit condition includes that an output voltage of the DC source is less than the grid voltage, and the negative electrode of the DC source is short-circuited to ground, or the DC negative line between the semiconductor component and the negative electrode of the DC source is short-circuited to ground; and the safe current breaking period includes a negative half-cycle period during which the grid voltage is in a negative half cycle, and/or a partial positive half-cycle period during which the grid voltage is in a positive half cycle and a magnitude of the grid voltage is less than the output voltage.

In some embodiments, the semiconductor component is arranged between the negative electrode of the DC source and the DC negative bus of the DC bus; the short-circuit condition includes that the grid voltage is greater than a difference between a positive bus voltage of the DC bus and an output voltage of the DC source, and the negative electrode of the DC source is short-circuited to ground, or a DC negative line between the semiconductor component and the negative electrode of the DC source is short-circuited to ground; and the safe current breaking period includes a positive half-cycle period during which the grid voltage is in a positive half cycle, and/or a partial negative half-cycle period during which the grid voltage is in a negative half cycle and a magnitude of the grid voltage is less than a difference between the positive bus voltage of the DC bus and the output voltage of the DC source.

In some embodiments, the semiconductor component is arranged between the negative electrode of the DC source and a DC negative bus of the DC bus; the short-circuit protection method for an inverter further includes: turning off the designated relay within a safe current breaking period of a short-circuit condition in response to the short-circuit condition in which a positive electrode of the DC source is short-circuited to ground or a DC positive line connected to the positive electrode of the DC source is short-circuited to ground, where the safe current breaking period includes a negative half-cycle period during which the grid voltage is in a negative half cycle.

In some embodiments, the semiconductor component is configured to form a DC-DC converter in common positive connection connected between the DC source and the DC bus.

In some embodiments, the short-circuit protection method for an inverter further includes: turning off the designated relay within the safe current breaking period, after at least a part of switching components in the inverter circuit is turned off.

In some embodiments, the semiconductor component is a semiconductor switch, and the short-circuit protection method for an inverter further includes: turning off the designated relay within the safe current breaking period, after the semiconductor switch is turned off.

In some embodiments, the short-circuit protection method for an inverter further includes: determining a short-circuit point where the DC source is short-circuited to ground; and determining the short-circuit condition based on the short-circuit point of the DC source.

In some embodiments, the short-circuit protection method for an inverter further includes obtaining an output voltage of a DC source that is short-circuited to ground; and the process of determining the short-circuit condition based on the short-circuit point of the DC source includes: determining the short-circuit condition based on the short-circuit point and the output voltage of the DC source.

In some embodiments, the process of turning off the designated relay within the safe current breaking period includes: obtaining a present magnitude of the grid voltage; and turning off the designated relay in a case where the present magnitude matches the safe current breaking period.

Relevant descriptions of the short-circuit protection method for an inverter may be referred to other embodiments in this specification, and are not described in detail herein.

An energy system is further provided in an embodiment of the present disclosure. The energy system may include the inverter according to any of the embodiments of the present disclosure.

In some embodiments, the energy system may include multiple DC sources. In the energy system, the multiple DC sources are connected to a DC side of an inverter circuit in the inverter through a DC-DC converter. An AC side of the inverter circuit is configured to connect a power grid.

In some embodiments, the DC sources may include a photovoltaic panel, an energy storage battery, a DC-DC converter, an inverter, and a relay. The photovoltaic panel and the energy storage battery may serve as a DC source for supplying DC power and be connected to the DC side of the inverter. The relay is configured to control the photovoltaic system to connect to or disconnect from the power grid. The DC-DC converter is connected between the DC side of the inverter and the DC source, and is configured to regulate an output voltage of the photovoltaic panel and/or energy storage battery.

For relevant descriptions of the photovoltaic system according to the embodiment, reference may be made to other embodiments in the present disclosure. Details thereof are not further described here in the specification.

It can be understood that the "connection" mentioned in the following embodiments should be understood as "electrical connection", "communication connection", or the like, in a case where transferring of electrical signals or data may occur between the connected circuits, modules, units, and the like.

It may be understood that the specific examples herein are only to help those skilled in the art better understand the embodiments of the present disclosure, and are not intended to limit the scope of the present disclosure.

It can be understood that in the embodiments in the present disclosure, the serial numbers of the processes do not indicate any execution order thereof. The execution order of the processes should be determined by their functions and internal logic, and should not constitute any limitation on the implementation process of the embodiments of this specification.

It can be understood that the various embodiments described in this specification can be implemented individually or in combination, which is not limited in the embodiments in this specification.

Unless otherwise defined, all technical and scientific terms used herein have the same meanings as commonly understood by those skilled in the art to which the present disclosure pertains. Terms are used in the present disclosure to describe particular embodiments and are not intended to limit the present disclosure. The term "and/or" as used herein includes any and all combinations of one or more related listed items. As used in this specification and the claims, the singular forms "a", "above" and "the" are intended to include the plural forms as well, unless the context clearly dictates otherwise.

Those skilled in the art may understand that, units and algorithm steps described in conjunction with the embodiments disclosed herein may be implemented by electronic hardware or a combination of computer software and electronic hardware. Whether a function is to be implemented by hardware or software depends on a particular application of the technical solution and a design constraint. Those skilled in the art may implement the described functions through different methods for each particular application. Such implementation should not be considered going beyond the scope of the present disclosure.

Those skilled in the art can clearly understand that for the convenience and simplicity of description, the specific working processes of the above-described system, apparatus and unit may be referred to the corresponding processes in the foregoing method embodiments, and are not described in detail here.

From the embodiments of the present disclosure, it should be understood that the disclosed system, apparatus and method may be implemented in other manners. For example, the apparatus embodiments described above are only illustrative. For example, the units are defined only based on logical functions, and there may be other division manners in actual implementations. For example, multiple units or components may be combined with each other or integrated into another system, or some features may be omitted or not implemented. In addition, the shown or discussed coupling or direct coupling or communication connection may be indirect coupling or communication connection through some interfaces, apparatuses or units, and may be electrical, mechanical or in other forms.

The units described as separate components may or may not be physically separated. Components shown as units may or may not be physical units, that is, the components may be located at a same position or distributed over multiple network units. Some or all of the units may be adopted based on an actual need to achieve the objective of the solutions in the embodiments of the present disclosure.

Described above are only some specific embodiments of the present disclosure, and the protection scope of the present disclosure is not limited thereto. Any changes or alternations that can be easily envisaged by those skilled in the art within the technical scope disclosed in the present disclosure shall fall within the protection scope of the present disclosure. Therefore, the protection scope of the present disclosure shall be in accordance with the protection scope of the claims.

## Claims

1. An inverter, comprising:
a direct-current, DC, bus, configured to connect a DC source, wherein a semiconductor component is connected between the DC source and the DC bus;
an inverter circuit, wherein a DC side of the inverter circuit is connected to the DC bus, an alternating-current, AC, side of the inverter circuit is configured to connect a power grid via a designated relay; and
a controller, configured to turn off the designated relay within a safe current breaking period of a short-circuit condition, in response to the short-circuit condition in which a DC line between the semiconductor component and the DC source is short-circuited to ground, or the DC source is short-circuited to ground, wherein during the safe current breaking period, a short-circuit current is 0 or is less than a breaking current of the designated relay.

2. The inverter according to claim 1, wherein the semiconductor component is connected between a positive electrode of the DC source and a DC positive bus of the DC bus, wherein
the short-circuit condition comprises that:
an output voltage of the DC source is less than a grid voltage; and
the positive electrode of the DC source is short-circuited to ground; or, a DC positive line between the semiconductor component and the positive electrode of the DC source is short-circuited to ground, and
the safe current breaking period comprises at least one of:
a positive half-cycle period during which the grid voltage is in a positive half cycle; and
a partial negative half-cycle period during which the grid voltage is in a negative half cycle and the grid voltage is less than the output voltage of the DC source.

3. The inverter according to claim 1, wherein the semiconductor component is connected between a positive electrode of the DC source and a DC positive bus of the DC bus, wherein
the short-circuit condition comprises that:
a grid voltage is greater than a difference between a positive bus voltage of the DC bus and an output voltage of the DC source; and
the positive electrode of the DC source is short-circuited to ground; or, a DC positive line between the semiconductor component and the positive electrode of the DC source is short-circuited to ground; and
the safe current breaking period comprises at least one of:
a negative half-cycle period during which the grid voltage is in a negative half cycle; and
a partial positive half-cycle period during which the grid voltage is in a positive half cycle and a magnitude of the grid voltage is less than the difference between the positive bus voltage of the DC bus and the output voltage of the DC source.

4. The inverter according to claim 1, wherein the semiconductor component is connected between a positive electrode of the DC source and a DC positive bus of the DC bus, wherein the controller is further configured to:
turn off the designated relay within a safe current breaking period of a short-circuit condition, in response to the short-circuit condition in which a negative electrode of the DC source is short-circuited to ground, or a DC negative line connected to the negative electrode of the DC source is short-circuited to ground, wherein
the safe current breaking period comprises a positive half-cycle period during which the grid voltage is in a positive half cycle.

5. The inverter according to any one of claims 2 to 4, wherein the semiconductor component is configured to form a DC-DC converter in common negative connection arranged between the DC source and the DC bus.

6. The inverter according to claim 1, wherein the semiconductor component is arranged between a negative electrode of the DC source and a DC negative bus of the DC bus, wherein
the short-circuit condition comprises that:
an output voltage of the DC source is less than a grid voltage; and
the negative electrode of the DC source is short-circuited to ground; or, a DC negative line between the semiconductor component and the negative electrode of the DC source is short-circuited to ground; and
the safe current breaking period comprises at least one of:
a negative half-cycle period during which the grid voltage is in a negative half cycle; and
a partial positive half-cycle period during which the grid voltage is in a positive half cycle and a magnitude of the grid voltage is less than the output voltage.

7. The inverter according to claim 1, wherein the semiconductor component is arranged between a negative electrode of the DC source and a DC negative bus of the DC bus, wherein
the short-circuit condition comprises that:
a grid voltage is greater than a difference between a positive bus voltage of the DC bus and an output voltage of the DC source; and
the negative electrode of the DC source is short-circuited to ground; or, a DC negative line between the semiconductor component and the negative electrode of the DC source is short-circuited to ground; and
the safe current breaking period comprises at least one of:
a positive half-cycle period during which the grid voltage is in a positive half cycle; and
a partial negative half-cycle period during which the grid voltage is in a negative half cycle and a magnitude of the grid voltage is less than the difference between the positive bus voltage of the DC bus and the output voltage of the DC source.

8. The inverter according to claim 1, wherein the semiconductor component is arranged between a negative electrode of the DC source and a DC negative bus of the DC bus, wherein the controller is further configured to:
turn off the designated relay within a safe current breaking period of a short-circuit condition, in response to the short-circuit condition in which a positive electrode of the DC source is short-circuited to ground, or a DC positive line connected to the positive electrode of the DC source is short-circuited to ground, wherein
the safe current breaking period comprises a negative half-cycle period during which the grid voltage is in a negative half cycle.

9. The inverter according to any one of claims 6 to 8, wherein the semiconductor component is configured to form a DC-DC converter in common positive connection arranged between the DC source and the DC bus.

10. The inverter according to any one of claims 1 to 4 or 6 to 8, wherein the controller is configured to turn off the designated relay within the safe current breaking period, after at least a part of switching components in the inverter circuit is turned off.

11. The inverter according to claim 10, wherein the switching component is a semiconductor switch; and the controller is further configured to:
turn off the designated relay within the safe current breaking period, after at least the part of semiconductor switches in the inverter circuit is turned off;
determine a short-circuit point where the DC source is short-circuited to ground;
determine the short-circuit condition based on the short-circuit point of the DC source.
obtain a present magnitude of a grid voltage; and
turn off the designated relay in response to the present magnitude matching the safe current breaking period.

12. The inverter according to claim 11, wherein the controller is configured to:
obtain an output voltage of the DC source that is short-circuited to ground; and
determine the short-circuit condition based on the short-circuit point and the output voltage of the DC source.

13. A short-circuit protection method for the inverter according to any one of claims 1 to 12, comprising:
turning off the designated relay within a safe current breaking period of a short-circuit condition, in response to the short-circuit condition in which a DC line between the semiconductor component and the DC source is short-circuited to ground, or the DC source is short-circuited to ground, wherein during the safe current breaking period, a short-circuit current is 0 or is less than a breaking current of the designated relay.

14. An energy system, comprising the inverter according to any one of claims 1 to 12, wherein
the AC side of the inverter is configured to connect a power grid.

15. The energy system according to claim 14, further comprising a plurality of DC sources, wherein
the plurality of DC sources are connected to a DC side of the inverter.
